(19) Europäisches Patentamt
European Patent Office
Office européen des brevets

(11) **EP 3 128 776 B1**

(12) **EUROPEAN PATENT SPECIFICATION**

(45) Date of publication and mention
of the grant of the patent:
**13.10.2021  Bulletin 2021/41**

(51) Int Cl.:
*H04W 16/00* (2009.01)　　　*H04L 5/14* (2006.01)

(21) Application number: **14890492.3**

(22) Date of filing: **30.04.2014**

(86) International application number:
**PCT/CN2014/076665**

(87) International publication number:
**WO 2015/165103 (05.11.2015 Gazette 2015/44)**

(54) **METHODS AND TERMINALS FOR ELIMINATING INTERFERENCE**

VERFAHREN UND ENDGERÄTE ZUR BESEITIGUNG VON INTERFERENZEN

PROCÉDÉS ET TERMINAUX POUR ÉLIMINER UN BROUILLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2017  Bulletin 2017/06**

(73) Proprietor: **Huawei Technologies Co., Ltd.
Shenzhen, Guangdong 518129 (CN)**

(72) Inventors:
• **CHEN, Teyan
Shenzhen, Guangdong
518129 (CN)**
• **LIU, Sheng
Shenzhen, Guangdong
518129 (CN)**
• **YU, Rongdao
Shenzhen, Guangdong
518129 (CN)**

(74) Representative: **Maiwald Patent- und
Rechtsanwaltsgesellschaft mbH
Elisenhof
Elisenstraße 3
80335 München (DE)**

(56) References cited:
EP-A1- 2 933 941　　　CN-A- 102 347 808
CN-A- 103 190 090　　　CN-A- 103 209 415
US-A1- 2011 149 714　　　US-A1- 2013 044 791
US-A1- 2013 286 903

• **None**

## Description

## TECHNICAL FIELD

Embodiments of the present invention relate to the field of communications technologies, and more specifically, to interference cancellation methods and terminals.

## BACKGROUND

In a wireless communications system such as a mobile cellular communications system, a wireless local area network (WLAN, Wireless Local Area Network), or fixed wireless access (FWA, Fixed Wireless Access), communications nodes such as a base station (BS, Base Station) or an access point (AP, Access Point), a relay station (RS, Relay Station), and user equipment (UE, User Equipment) are generally capable of transmitting their own signals and receiving a signal from another communications node. Because a radio signal is attenuated greatly in a radio channel, compared with a transmit signal of a local end, a signal from a communications peer becomes extremely weak when the signal arrives at a receive end. For example, a power difference between a transmit signal and a receive signal that are of a communications node in the mobile cellular communications system may be 80 dB to 140 dB or even larger. Therefore, to avoid self-interference caused by a transmit signal of a transceiver to a receive signal of the same transceiver, radio signal transmission and reception are generally separated by using different frequency bands or different time periods. For example, in Frequency Division Duplex (FDD, Frequency Division Duplex), for transmission and reception, communication is performed by using different frequency bands separated by a guard band. In Time Division Duplex (TDD, Time Division Duplex), for transmission and reception, communication is performed by using different time periods separated by a guard time interval. The guard band in the FDD system and the guard time interval in the TDD system are both used to ensure that reception and transmission are fully isolated and to avoid interference caused by transmission to reception.

Different from an existing FDD or TDD technology, a wireless full-duplex technology may implement operations of reception and transmission simultaneously on a same radio channel. In this way, theoretically, spectral efficiency of the wireless full-duplex technology is twice that of the FDD or TDD technology. Apparently, a precondition for implementing wireless full-duplex lies in that strong interference (referred to as self-interference, Self-interference) caused by a transmit signal of a transceiver to a receive signal of the same transceiver is avoided, reduced, or canceled as much as possible, so that proper reception of a wanted signal is not affected.

According to the foregoing description, existing research on interference cancellation of a wireless full-duplex system is mainly centered on cancellation of a self-interference signal of each communication node. However, this is based on an ideal point-to-point full-duplex communication scenario. In a point-to-multipoint communication scenario, reception of a downlink signal of a terminal may be interfered by an uplink signal of another terminal; consequently, the interfered terminal cannot properly receive a wanted signal.

US 2011/149714 describes methods and devices for adaptive non-linear self-jamming interference cancellation.
US2013044791 A1 proposes an adaptive joint linear and non-linear digital filter that can adaptively estimate and reconstruct cascaded effects of linear and non-linear self-jamming distortions introduced by non-linearities in the transmit and/or receive chains.
US2013286903 A1 is related to a communications apparatus used in a wireless full duplex system. The therein described communications apparatus includes a receiver chain connected to an antenna and an interference cancelling chain. One or more cancellation signals generated by the interference cancelling chain are fed back to the receiver chain prior to the first baseband amplifier which uses the first automatic gain control and the second automatic gain controller.

## SUMMARY

Embodiments of the present invention provide interference cancellation methods and terminals, which can cancel an interference signal that is in a received signal and between terminals as defined by the independent claims. Further embodiments are provided by the dependent claims.

A first aspect provides an interference cancellation method, where the method includes: determining, by a first terminal, a channel parameter from a transmit antenna of a second terminal to a receive antenna of the first terminal; receiving, by the first terminal, a first signal by using a first resource, where the first signal includes a first interference signal and a wanted signal that is from a base station, and the first interference signal is an interference signal generated when the second terminal sends a second signal to the base station by using the first resource; and determining, by the first terminal, the first interference signal in the first signal according to the channel parameter, and canceling the first interference signal.

A second aspect provides an interference cancellation method, where the method includes: sending, by a second terminal, a third signal to a base station by using a second resource, where there is no downlink signal to be sent to a first terminal by using the second resource, and the first terminal receives, by using the second resource, a second interference signal generated by the third signal; sending, by the second terminal, reconstruction information of the third signal to the first terminal, so that the first terminal determines a channel parameter from a transmit antenna of the second terminal to a receive antenna of the first terminal according to the second interference signal and the reconstruction information of the third signal, where a resource used by the second terminal to send the reconstruction information of the third signal is different from the second resource; and sending, by the second terminal, a second signal to the base station by using the first resource, where the first terminal receives a first signal by using the first resource, the first signal includes a first interference signal and a wanted signal that is from the base station, and the first interference signal is an interference signal generated when the second terminal sends the second signal to the base station by using the first resource.

A third aspect provides a terminal, where the terminal includes: a determining module 310, configured to determine a channel parameter from a transmit antenna of a second terminal to a receive antenna of the terminal; a first receiving module 320, configured to receive a first signal by using a first resource, where the first signal includes a first interference signal and a wanted signal that is from a base station, and the first interference signal is an interference signal generated when the second terminal sends a second signal to the base station by using the first resource; and an interference cancellation module 330, configured to determine, according to the channel parameter determined by the determining module 310, the first interference signal in the first signal received by the first receiving module 320, and cancel the first interference signal.

A fourth aspect provides a terminal, where the terminal includes: a first sending module 410, configured to send a third signal to a base station by using a second resource, where there is no downlink signal to be sent to a first terminal by using the second resource, and the first terminal receives, by using the second resource, a second interference signal generated by the third signal; a second sending module 420, configured to send reconstruction information of the third signal to the first terminal, so that the first terminal determines a channel parameter from a transmit antenna of the terminal to a receive antenna of the first terminal according to the second interference signal and the reconstruction information of the third signal, where a resource used by the terminal to send the reconstruction information of the third signal is different from the second resource; and a third sending module 430, configured to send a second signal to the base station by using the first resource, where the first terminal receives a first signal by using the first resource, the first signal includes a first interference signal and a wanted signal that is from the base station, and the first interference signal is an interference signal generated when the terminal sends the second signal to the base station by using the first resource.

Based on the foregoing technical solutions, according to the interference cancellation methods and terminals that are provided in the embodiments of the present invention, cancellation of an interference signal that is in a signal received by an interfered terminal and that is between terminals can be implemented by using a channel parameter between an interfering terminal and the interfered terminal.

**BRIEF DESCRIPTION OF DRAWINGS**

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a scenario in which an interference cancellation method according to an embodiment of the present invention is applied;
FIG. 2 is a schematic flowchart of an interference cancellation method according to an embodiment of the present invention;
FIG. 3 is a schematic flowchart of an interference cancellation method according to another embodiment of the present invention;
FIG. 4 is a schematic flowchart of an interference cancellation method according to another embodiment of the present invention;
FIG. 5 is a schematic block diagram of a terminal according to an embodiment of the present invention;
FIG. 6 is a schematic block diagram of a determining module according to an embodiment of the present invention;
FIG. 7 is a schematic block diagram of a terminal according to another embodiment of the present invention;
FIG. 8 is a schematic block diagram of a terminal according to another embodiment of the present invention; and
FIG. 9 is a schematic block diagram of a terminal according to another embodiment of the present invention.

**DESCRIPTION OF EMBODIMENTS**

The following clearly and completely describes the technical solutions in the embodiments of the present invention with reference to the accompanying drawings in the embodiments of the present invention.

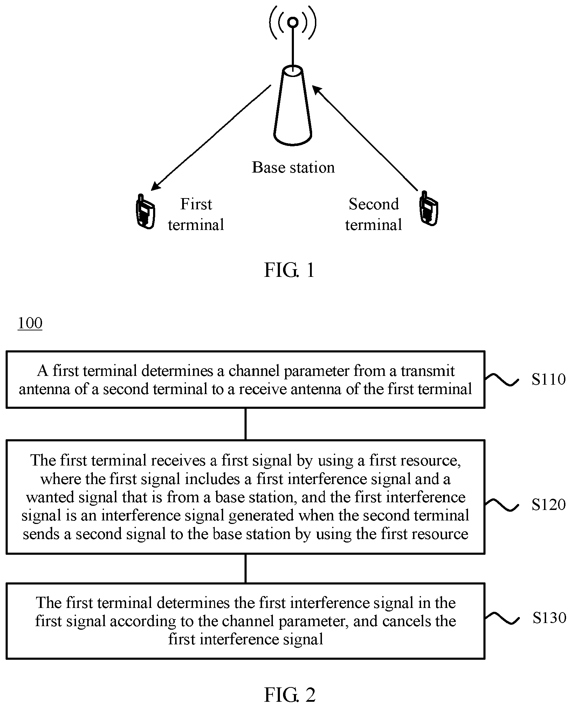

FIG. 1 shows a schematic diagram of a scenario in which an interference cancellation method according to an embodiment of the present invention is applied. In the scenario shown in FIG. 1, one base station communicates with two terminals. If the base station is capable of full-duplex communication, and the two terminals are only capable of TDD or FDD communication, a time-frequency resource used by a second terminal to send an uplink signal may be the same as a time-frequency resource used by a first terminal to receive a downlink signal. If the base station and the two terminals are all capable of full-duplex communication, a time-frequency resource used by a second terminal to send an uplink signal may also be the same as a time-frequency resource used by a first terminal to receive a downlink signal. In the foregoing two cases, interference to the first terminal that receives the downlink signal may be generated by the second terminal that sends the uplink signal. Consequently, the first terminal cannot properly receive a wanted signal from the base station. This embodiment of the present invention provides an interference cancellation solution for an interference signal between the foregoing terminals.

The following briefly describes a principle of the solution in this embodiment of the present invention with reference to a related formula. Assuming that two terminals and one base station use a same time-frequency resource to perform full-duplex communication, an interfered terminal simultaneously receives an interference signal from the other terminal and a wanted signal sent by the base station, and a signal y received by the interfered terminal may be represented as:

$$y = \mathbf{h}_{self}^{H}\mathbf{x}_{self} + \mathbf{h}_{BS}^{H}\mathbf{x}_{BS} + \mathbf{h}_{UE}^{H}\mathbf{x}_{UE} + n$$

The $\mathbf{h}_{self}$, $\mathbf{h}_{BS}$, and $\mathbf{h}_{UE}$ are respectively channel parameters of a self-interference channel, a communication channel, and an interference channel between the terminals; the $\mathbf{x}_{self}$, $\mathbf{x}_{BS}$, and $\mathbf{x}_{UE}$ are respectively a signal sent by the terminal, a signal sent by the base station, and a signal sent by a terminal that is in a cell and that generates interference. It can be seen from the foregoing expression, to obtain, from the signal y, the wanted signal sent by the base station, interference parts $\mathbf{h}_{self}\mathbf{x}_{self}$ and $\mathbf{h}_{UE}\mathbf{x}_{UE}$ need to be canceled. Cancellation of the $\mathbf{h}_{self}\mathbf{x}_{self}$, that is, a self-interference signal, is not described in this embodiment of the present invention, and only cancellation of the interference signal $\mathbf{h}_{UE}\mathbf{x}_{UE}$ between the terminals is discussed. To cancel the interference signal between the terminals, the channel parameter $\mathbf{h}_{UE}$ between the terminals and the signal $\mathbf{x}_{UE}$ sent by the terminal generating interference need to be obtained. The $\mathbf{h}_{UE}$ may be obtained by means of channel estimation or another method, and the $\mathbf{x}_{UE}$ may be obtained from the terminal generating interference or be obtained by means of estimation. For ease of description, the $\mathbf{h}_{UE}\mathbf{x}_{UE}$ part in the signal received by the interfered terminal is referred to as an interference signal in the following, such as a first interference signal or a second interference signal.

It should be understood that in this embodiment of the present invention, the terminal is an access terminal that uses a wireless full-duplex technology or a wireless half-duplex technology, or may be referred to as a system, a subscriber unit, a subscriber station, a mobile station, a mobile, a remote station, a remote terminal, a mobile device, a user terminal, a terminal, a wireless communications device, a user agent, a user apparatus, or user equipment (User Equipment, UE). The terminal may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, an in-vehicle device, a computing device, or another processing device connected to a wireless modem.

It should further be understood that in this embodiment of the present invention, the base station may be configured to communicate with a mobile device. The base station may be an AP (Access Point, wireless access point) of Wi-Fi, or a BTS (Base Transceiver Station, base transceiver station) in GSM (Global System of Mobile communication, Global System for Mobile communication) or CDMA (Code Division Multiple Access, Code Division Multiple Access), or may be an NB (NodeB, NodeB) in WCDMA (Wideband Code Division Multiple Access, Wideband Code Division Multiple Access), or may be an eNB or an eNodeB (Evolutional Node B, evolved NodeB) in LTE (Long Term Evolution, Long Term Evolution), or a relay station or an access point, or a base station device in a future 5G network, or the like.

It should further be understood that FIG. 1 only shows a typical scenario in which the interference cancellation method according to this embodiment of the present invention is applied. In the application scenario, there may further be multiple terminals similar to the first terminal or the second terminal, and no imitation is imposed herein in this embodiment of the present invention.

FIG. 2 shows an interference cancellation method 100 according to an embodiment of the present invention. The method 100 may be executed by an interfered terminal, that is, a first terminal. As shown in FIG. 2, the method 100 includes:

S110. The first terminal determines a channel parameter from a transmit antenna of a second terminal to a receive antenna of the first terminal.

S120. The first terminal receives a first signal by using a first resource, where the first signal includes a first interference signal and a wanted signal that is from a base station, and the first interference signal is an interference signal generated when the second terminal sends a second signal to the base station by using the first resource.

S130. The first terminal determines the first interference signal in the first signal according to the channel parameter, and cancels the first interference signal.

Therefore, in the interference cancellation method provided in this embodiment of the present invention, a first terminal can implement, according to a channel parameter from a transmit antenna of a second terminal to a receive antenna of the first terminal, cancellation of an interference signal that is in a signal received by using a first resource and that is between the terminals.

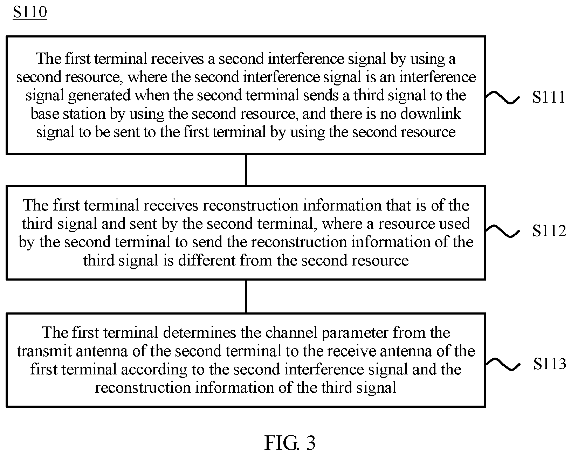

In S110, multiple methods may be used by the first terminal to determine the channel parameter from the transmit antenna of the second terminal to the receive antenna of the first terminal. As shown in FIG. 3, in an embodiment, S110 includes:

S111. The first terminal receives a second interference signal by using a second resource, where the second interference signal is an interference signal generated when the second terminal sends a third signal to the base station by using the second resource, and there is no downlink signal to be sent to the first terminal by using the second resource.

S112. The first terminal receives reconstruction information that is of the third signal and sent by the second terminal, where a resource used by the second terminal to send the reconstruction information of the third signal is different from the second resource.

S113. The first terminal determines the channel parameter from the transmit antenna of the second terminal to the receive antenna of the first terminal according to the second interference signal and the reconstruction information of the third signal.

Because there is no downlink signal to be sent to the first terminal by using the second resource, that is, the base station sends no signal to the first terminal, if the first terminal sends no signal to the outside by using the second resource, a signal received by the first terminal may be approximately considered as the second interference signal generated when the second terminal sends the third signal. The third signal may be obtained by means of reconstruction by using the reconstruction information of the third signal, so that the channel parameter, such as an amplitude and a phase, from the transmit antenna of the second terminal to the receive antenna of the first terminal may be estimated according to the second interference signal and the third signal obtained by means of reconstruction.

It should be understood that if the first terminal further sends a signal to the outside when receiving the second interference signal by using the second resource, self-interference cancellation may first be performed on a received signal when the channel parameter is being estimated. A signal that remains after the self-interference cancellation may be approximately considered as the second interference signal, and no limitation is imposed herein in this embodiment of the present invention.

Optionally, a variation may further be made to the foregoing embodiment to determine the channel parameter from the transmit antenna of the second terminal to the receive antenna of the first terminal. For example, the third signal sent by the second terminal by using the second resource is a fixed signal pre-agreed between the first terminal and the second terminal. The third signal is only used to test the channel parameter between the two terminals and is not an uplink signal sent to the base station. In this case, because the third signal is a pre-agreed fixed signal, the second terminal does not need to send the reconstruction information of the third signal to the first terminal, but needs to allocate a time-frequency resource dedicated to estimating the channel parameter to the two terminals. Compared with allocating a resource dedicated to estimating the channel parameter to the two terminals, the solution of S111 to S113 may reduce resource overheads to a great extent.

In a specific embodiment, when a power ratio of an interference signal to a wanted signal is greater than a first threshold and less than a second threshold, where the interference signal and the wanted signal are in a signal received by the first terminal, the reconstruction information of the third signal includes an unmodulated digital baseband signal and a modulation scheme that are corresponding to the third signal; before the first terminal determines the first interference signal in the first signal according to the channel parameter, and cancels the first interference signal, the method 100 further includes: receiving, by the first terminal, reconstruction information that is of the second signal and sent by the second terminal, where the reconstruction information of the second signal includes an unmodulated digital baseband signal and a modulation scheme that are corresponding to the second signal, and a resource used by the second terminal to send the reconstruction information of the second signal is different from the first resource; and that the first terminal determines the first interference signal in the first signal according to the channel parameter, and cancels the first interference signal includes: determining, by the first terminal, the first interference signal in the first signal according to the reconstruction information of the second signal and the channel parameter, and canceling the first interference signal.

It should be understood that a reciprocal of the first threshold may be a signal-to-noise ratio needed by the interfered first terminal to correctly estimate a wanted signal in a case in which interference cancellation between the terminals does not need to be performed, and a reciprocal of the second threshold may be a signal-to-noise ratio needed by the interfered first terminal to correctly estimate a wanted signal. For example, when a distance between the first terminal and the second terminal that are interfered by each other is relatively long (tens of meters), a power ratio of an interference signal to a wanted signal is relatively small generally, and $|P_D|$ < 10 dB, where the interference signal and the wanted signal are between the two terminals. In this case, the interfered first terminal cannot correctly estimate, by using a second time-frequency resource and from a received first signal, a wanted signal sent by the base station or a second signal sent by the second terminal.

In Sill, the second resource is a resource used by the first terminal to estimate the channel parameter between the terminals. A digital baseband signal corresponding to the second interference signal may be obtained by the first terminal by processing a received second interference signal by using a low noise amplifier (LNA, Low Noise Amplifier), a down-converter, an analog-to-digital converter (ADC, Analog-to-Digital Converter), and the like.

In S112, the first terminal may use an outband resource to receive the reconstruction information that is of the third signal and sent by the second terminal, where the reconstruction information of the third signal includes an unmodulated digital baseband signal and a modulation scheme that are corresponding to the third signal. The outband resource refers to a resource except a preset time-frequency resource used for communication between a base station and a terminal. For example, the second terminal may send the reconstruction information of the third signal to the first terminal in a wired connection communication manner, a device to device communication manner, a wireless local area network communication manner, or the like. The second terminal may simultaneously send the reconstruction information of the third signal to the first terminal and send the third signal to the base station, or the second terminal may send the reconstruction information of the third signal to the first terminal before sending the third signal to the base station. By using the foregoing measures, after receiving the second interference signal, the first terminal may estimate the channel parameter according to the reconstruction information of the third signal in time, so that a delay is avoided.

In S113, the first terminal obtains, by means of reconstruction according to the unmodulated digital baseband signal and the modulation scheme that are corresponding to the third signal, the third signal sent by the second terminal to the base station by using the second resource. The third signal obtained by means of reconstruction is a modulated digital baseband signal. The channel parameter from the transmit antenna of the second terminal to the receive antenna of the first terminal may be estimated according to the third signal obtained by means of reconstruction and the digital baseband signal corresponding to the second interference signal. Generally, a relative location and an environment in which a terminal is located remains unchanged in a period of time, so that it may be considered that the channel parameter remains unchanged in the period of time. Therefore, the channel parameter may be used for interference cancellation between the terminals in the first resource whose time is close to the second resource.

In S120, the first resource is a resource needed by the first terminal to perform interference cancellation between the terminals. The first signal received by the first terminal by using the first resource includes the first interference signal and the wanted signal that is from the base station, where the first interference signal is the interference signal generated when the second terminal sends the second signal to the base station by using the first resource. Interference cancellation between the terminals aims to cancel the first interference signal. By processing a received first signal by using an LNA, a down-converter, an ADC, and the like, the first terminal may obtain a digital baseband signal corresponding to the first signal.

Before S130, the method 100 further includes: receiving, by the first terminal by using an outband resource, reconstruction information that is of the second signal and sent by the second terminal, where the reconstruction information of the second signal includes an unmodulated digital baseband signal and a modulation scheme that are corresponding to the second signal. Similar to obtaining the channel parameter from the transmit antenna of the second terminal to the receive antenna of the first terminal, to perform interference cancellation in time and avoid a delay, the second terminal may simultaneously send the reconstruction information of the second signal to the first terminal and send the second signal to the base station, or the second terminal may send the reconstruction information of the second signal to the first terminal before sending the second signal to the base station.

In S130, the first terminal obtains, by means of reconstruction according to the unmodulated digital baseband signal and the modulation scheme that are corresponding to the second signal, a downlink second signal sent by the second terminal to the terminal by using the first resource, where the second signal obtained by means of reconstruction is a modulated digital baseband signal. The first interference signal received by the first terminal by using the first resource may be determined according to the second signal obtained by means of reconstruction and the channel parameter obtained in S113. The first interference signal in the digital baseband signal corresponding to the first signal may be canceled, so as to obtain a digital baseband signal corresponding to the wanted signal in the first signal.

It should be understood that in this embodiment of the present invention, the first terminal may not reconstruct the second signal but directly estimates, according to the reconstruction information of the second signal and the channel parameter obtained in S113, the first interference signal in the first signal received by the first terminal by using the second resource.

It should further be understood that if the first terminal further sends a signal to the outside by using the first resource, before performing digital interference cancellation between the terminals, the first terminal may further perform self-interference cancellation on the first signal.

In this embodiment of the present invention, reconstruction of the second signal and the third signal refers to reconstruction of modulated digital baseband signals of the second signal and the third signal. In addition to being obtained by means of reconstruction according to an unmodulated digital baseband signal and a modulation scheme, a modulated digital baseband signal may also be directly obtained from the second terminal.

In addition, when the channel parameter is being estimated and interference cancellation is being performed, if the second terminal estimates that linearity of a radio frequency channel is insufficient, the second terminal further needs to send a non-linear estimation of the radio frequency channel to the first terminal. Correspondingly, the reconstruction information of the second signal further includes a non-linear estimation of a radio frequency channel of the second signal, and the reconstruction information of the third signal further includes a non-linear estimation of a radio frequency channel of the third signal.

In another specific embodiment, when a power ratio of an interference signal to a wanted signal is greater than or equal to a second threshold and less than or equal to a third threshold, where the interference signal and the wanted signal are in a signal received by the first terminal, the reconstruction information of the third signal includes an unmodulated digital baseband signal and a modulation scheme that are corresponding to the third signal.

It should be understood that a reciprocal of the second threshold may be a signal-to-noise ratio needed by the interfered first terminal to correctly estimate a wanted signal. The third threshold may be a maximum power ratio that can be tolerated without affecting normal reception of a digital wanted signal by a receive antenna. For example, when a distance between the first terminal and the second terminal that are interfered by each other is relatively short (several meters), but a distance between a terminal and the base station is relatively long (hundreds of meters), a power ratio of an interference signal to a wanted signal is relatively large, and $|P_D|$ is approximately 20 dB to 30 dB, where the interference signal and the wanted signal are between the two terminals. In this case, after obtaining a channel parameter of an interference channel between the terminals by means of channel estimation, the interfered first terminal may obtain, by means of estimation, the third signal sent by the second terminal.

In this specific embodiment, the method for obtaining the channel parameter from the transmit antenna of the second terminal to the receive antenna of the first terminal may be similar to the obtaining method described in S111 to S113 of the previous embodiment, reception of the first signal and processing on the first signal are also similar to those in the method described in S120 of the previous embodiment, and details are not described herein.

In S130, the first terminal may obtain, by means of reconstruction according to the unmodulated digital baseband signal and the modulation scheme that are corresponding to the second signal, a downlink second signal sent by the second terminal to the terminal by using the first resource, where the second signal obtained by means of reconstruction is a modulated digital baseband signal. Because a distance between the two terminals is relatively short and the terminals are relatively far from the base station, the first interference signal in the first signal received by the first terminal by using the first resource is extremely strong, and the second signal may be relatively accurately calculated according to the channel parameter obtained in S113. Therefore, the first interference signal in the first signal may be determined. The first interference signal in the digital baseband signal corresponding to the first signal may be canceled, so as to obtain a digital baseband signal corresponding to the wanted signal in the first signal. Similarly, self-interference cancellation may also be performed on the first signal.

In addition, when the channel parameter is being estimated and interference cancellation is being performed, if the second terminal estimates that linearity of a radio frequency channel is insufficient, the second terminal further needs to send a non-linear estimation of the radio frequency channel to the first terminal. Correspondingly, the reconstruction information of the third signal further includes a non-linear estimation of a radio frequency channel of the third signal; before the first terminal determines the first interference signal in the first signal according to the channel parameter, and cancels the first interference signal, the method further includes: receiving, by the first terminal, reconstruction information that is of the second signal and sent by the second terminal, where the reconstruction information of the second signal includes a non-linear estimation of a radio frequency channel of the second signal, and a resource used by the second terminal to send the reconstruction information of the second signal is different from the first resource; and that the first terminal determines the first interference signal in the first signal according to the channel parameter, and cancels the first interference signal includes: determining, by the first terminal, the first interference signal in the first signal according to the reconstruction information of the second signal and the channel parameter, and canceling the first interference signal.

Optionally, in still another specific embodiment, when a power ratio of an interference signal to a wanted signal is greater than a third threshold, where the interference signal and the wanted signal are in a signal received by the first terminal, the reconstruction information of the third signal includes a radio frequency signal corresponding to the third signal; before the first terminal determines the first interference signal in the first signal according to the channel parameter, and cancels the first interference signal, the method further includes: receiving, by the first terminal, reconstruction information that is of the second signal and sent by the second terminal, where the reconstruction information of the second signal includes a radio frequency signal corresponding to the second signal, and a resource used by the second terminal to send the reconstruction information of the second signal is different from the first resource; and that the first terminal determines the first interference signal in the first signal according to the channel parameter, and cancels the first interference signal includes: determining, by the first terminal, the first interference signal in the first signal according to the reconstruction information of the second signal and the channel parameter, and canceling the first interference signal.

It should be understood that the third threshold may be a maximum power ratio that can be tolerated without affecting normal reception of a digital wanted signal by a receive antenna. For example, when a distance between the first terminal and the second terminal that are interfered by each other is relatively short (10 to 30 centimeters), a power ratio of an interference signal to a wanted signal is relatively large, and approximately, $|P_D|$ > 40 dB, where the interference signal and the wanted signal are between the two terminals. In this case, a dynamic range of a remaining analog signal obtained after radio frequency self-interference cancellation is performed on a received signal is relatively large; consequently, a case in which a wanted signal in the remaining analog signal cannot be correctly quantized may occur when an analog-to-digital converter (ADC, Analog-to-Digital Converter) converts the remaining analog signal into a digital baseband signal. Therefore, radio frequency interference cancellation between the terminals needs to be performed, so as to further perform digital interference cancellation between the terminals.

In this specific embodiment, methods described in S111 and S120 are similar to the corresponding methods in the foregoing two specific embodiments, and details are not described herein.

In S112, the first terminal may use an outband resource to receive the reconstruction information that is of the third signal and sent by the second terminal, where the reconstruction information of the third signal includes a radio frequency signal corresponding to the third signal. Similarly, the second terminal may simultaneously send the reconstruction information of the third signal to the first terminal and send the third signal to the base station, or may send the reconstruction information of the third signal to the first terminal before sending the third signal to the base station.

In S113, by using a down-converter, a low pass filter (LPF, Low Pass Filter), and an ADC to process the radio frequency signal corresponding to the third signal, the first terminal may obtain a digital baseband signal corresponding to the third signal, that is, the digital baseband signal corresponding to the third signal is obtained by means of reconstruction. Therefore, the channel parameter from the transmit antenna of the second terminal to the receive antenna of the first terminal may be estimated according to the digital baseband signal corresponding to the second interference signal and the digital baseband signal that is corresponding to the third signal and obtained by means of reconstruction.

Before S130, the method 100 further includes: receiving, by the first terminal, reconstruction information that is of the second signal and sent by the second terminal, where the reconstruction information of the second signal includes a radio frequency signal corresponding to the second signal, and a resource used by the second terminal to send the reconstruction information of the second signal is different from the first resource. Similarly, the second terminal may simultaneously send the reconstruction information of the second signal to the first terminal and send the second signal to the base station, or may send the reconstruction information of the second signal to the first terminal before sending the second signal to the base station.

In S130, the first terminal obtains, by means of reconstruction according to a radio frequency signal corresponding to the first signal and the channel parameter obtained in S113, a radio frequency signal corresponding to the first interference signal, so as to perform radio frequency interference cancellation between the terminals on the first signal, which may be seen as a first level of interference cancellation between the terminals. A corresponding digital baseband signal is obtained by using a down-converter, an LPF, and an ADC to process a remaining signal obtained after the radio frequency interference cancellation between the terminals is performed on the first signal. A corresponding digital baseband signal is obtained by using a down-converter, an LPF, and an ADC to process the radio frequency signal corresponding to the second signal. A digital baseband signal corresponding to the first interference signal is obtained by means of reconstruction by using a digital baseband signal of the second signal and the channel parameter obtained in S113, so as to perform digital interference cancellation between the terminals on a digital baseband signal of the first signal, which may be seen as a second level of interference cancellation between the terminals.

It should be understood that if the first terminal further sends a signal to the outside by using the first resource, before performing interference cancellation between the terminals, the first terminal may further perform self-interference cancellation on the first signal. The self-interference cancellation herein includes radio frequency self-interference cancellation performed before the radio frequency interference cancellation between the terminals is performed, and digital self-interference cancellation performed before the digital interference cancellation between the terminals is performed.

Preferably, the first terminal may receive, in a wired connection communication manner, a radio frequency signal corresponding to the second signal sent by the second terminal and/or a radio frequency signal corresponding to the third signal. In the wired connection communication manner, interference from another radio frequency signal to the radio frequency signal corresponding to the second signal or the radio frequency signal corresponding to the third signal may be prevented.

It should be understood that in embodiments of the present invention, the first terminal may receive, in a direct communication manner such as a wired connection communication manner, a device to device (D2D, Device to Device) communication manner, or a wireless local area network (Wi-Fi, Wireless Fidelity) communication manner, information about the first signal sent by the second terminal and/or information about the third signal sent by the second terminal. When the foregoing direct communication manners are used, a resource used by the first terminal is a resource except a time-frequency resource allocated by the base station to the first terminal. Therefore, the first terminal may distinguish information about a signal received by using the resource allocated by the base station to the first terminal, from the information about the first signal or the information about the third signal. In this embodiment of the present invention, another implementable direct communication manner may also be used.

It should further be understood that any resource that meets a condition of channel parameter estimation may be used as the second resource to estimate the channel parameter. Therefore, the channel parameter between the terminals may be calculated in real time, so as to obtain latest information about a channel between the terminals, so that a channel parameter used when interference cancellation between the terminals is performed by using the first resource is more accurate, and a better interference cancellation effect can be achieved.

It should further be understood that in this embodiment of the present invention, there may be multiple methods for determining a power ratio of an interference signal to a wanted signal, where the interference signal and the wanted signal are in a signal received by the first terminal. The interference signal in the signal received by the first terminal refers to an interference signal that is in the signal received by the first terminal and that is generated because the second terminal sends a signal to the base station; the wanted signal in the signal received by the first terminal refers to a wanted signal received by the first terminal from the base station.

In this embodiment of the present invention, the power ratio of the interference signal to the wanted signal may be determined by estimating a distance between the first terminal and the second terminal and a distance between a terminal and the base station. The power ratio may also be determined by using power of an interference signal received by the first terminal by using a third resource and power of a signal received by the first terminal by using a fourth resource (the power is a sum of those of the interference signal and the wanted signal), where no downlink signal to be sent to the first terminal exists in the third resource, and the second terminal sends an uplink signal to the base station by using the third resource; the first terminal receives, by using the fourth resource, a downlink signal sent by the base station, and the second terminal sends an uplink signal to the base station by using the fourth resource. After the foregoing power ratio is determined, if no great change occurs in a communication environment in which the first terminal and the second terminal arc located, it may be considered that the power ratio is unchanged in a period of time.

Therefore, according to the interference cancellation method provided in this embodiment of the present invention, a first terminal can accurately estimate a channel parameter between terminals according to reconstruction information of a signal sent by a second terminal to a base station by using a first resource. The channel parameter between the terminals is applied to interference cancellation of a signal received by using the first resource, so that a better interference cancellation effect can be obtained.

It should be understood that in this embodiment of the present invention, use of a resource by each terminal is scheduled by the base station. The first terminal and the second terminal may determine, by using a corresponding indication message sent by the base station to the first terminal and the second terminal, the second resource used to estimate the channel parameter and the first resource used to perform interference cancellation, or the base station may notify the terminals of a resource allocation situation in a broadcast manner, so that according to presetting and by using a corresponding resource, the first terminal and the second terminal estimate the channel parameter or perform interference cancellation. A terminal may also use another feasible method to determine a resource used to estimate the channel parameter or perform interference cancellation.

It should further be understood that in this embodiment of the present invention, interference cancellation may be canceling all interference components in a signal (including a main-path interference signal and a near-field interference signal), or may be canceling some interference components in a signal (including a part of a main-path interference signal and a part of a near-field interference signal).

It should further be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

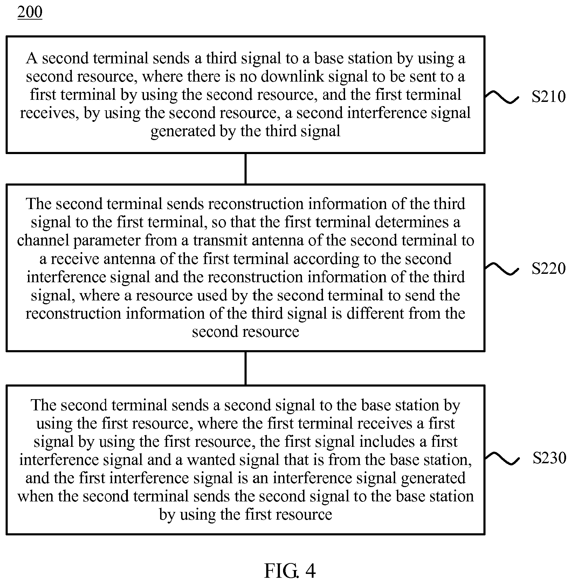

FIG. 4 shows a schematic flowchart of an interference cancellation method 200 according to an embodiment of the present invention. The method 200 may be executed by an interfering terminal, that is, a second terminal. As shown in FIG. 4, the method 200 includes:

S210. The second terminal sends a third signal to a base station by using a second resource, where there is no downlink signal to be sent to a first terminal by using the second resource, and the first terminal receives, by using the second resource, a second interference signal generated by the third signal.

S220. The second terminal sends reconstruction information of the third signal to the first terminal, so that the first terminal determines a channel parameter from a transmit antenna of the second terminal to a receive antenna of the first terminal according to the second interference signal and the reconstruction information of the third signal, where a resource used by the second terminal to send the reconstruction information of the third signal is different from the second resource.

S230. The second terminal sends a second signal to the base station by using the first resource, where the first terminal receives a first signal by using the first resource, the first signal includes a first interference signal and a wanted signal that is from the base station, and the first interference signal is an interference signal generated when the second terminal sends the second signal to the base station by using the first resource.

Therefore, according to the interference cancellation method provided in this embodiment of the present invention, reconstruction information of a signal sent by a second terminal to a base station by using a second resource is sent to a first terminal, so that the first terminal can estimate a channel parameter between the terminals, and cancellation of an interference signal that is in a signal received by using a first resource and that is between the terminals can be implemented according to the channel parameter and reconstruction information of a signal sent by the second terminal to the base station by using the first resource.

In an embodiment, when a power ratio of an interference signal to a wanted signal is greater than a first threshold and less than a second threshold, where the interference signal and the wanted signal are in a signal received by the first terminal, the reconstruction information of the third signal includes an unmodulated digital baseband signal and a modulation scheme that are corresponding to the third signal; and the method 200 further includes: sending, by the second terminal, reconstruction information of the second signal to the first terminal, where the reconstruction information of the second signal includes an unmodulated digital baseband signal and a modulation scheme that are corresponding to the second signal.

Optionally, when linearity of a radio frequency channel is insufficient, the reconstruction information of the second signal further includes a non-linear estimation of a radio frequency channel of the second signal; and the reconstruction information of the third signal further includes a non-linear estimation of a radio frequency channel of the third signal.

Optionally, in another embodiment, when a power ratio of an interference signal to a wanted signal is greater than or equal to a second threshold and less than or equal to a third threshold, where the interference signal and the wanted signal are in a signal received by the first terminal, the reconstruction information of the third signal includes an unmodulated digital baseband signal and a modulation scheme that are corresponding to the third signal.

Optionally, when linearity of a radio frequency channel is insufficient, the reconstruction information of the third signal further includes a non-linear estimation of a radio frequency channel of the third signal; and the method 200 further includes: sending, by the second terminal, reconstruction information of the second signal to the first terminal, where the reconstruction information of the second signal includes a non-linear estimation of a radio frequency channel of the second signal.

Optionally, in still another embodiment, when a power ratio of an interference signal to a wanted signal is greater than a third threshold, where the interference signal and the wanted signal are in a signal received by the first terminal, the reconstruction information of the third signal includes a radio frequency signal corresponding to the third signal; and the method 200 further includes: sending, by the second terminal, reconstruction information of the second signal to the first terminal, where the reconstruction information of the second signal includes a radio frequency signal corresponding to the second signal.

It should be understood that, that the second terminal sends reconstruction information of the third signal to the first terminal may include: sending, by the second terminal, the reconstruction information of the third signal to the first terminal in a wired connection communication manner, a device to device communication manner, or a wireless local area network communication manner.

It should be understood that the sending, by the second terminal, reconstruction information of the second signal to the first terminal may include: sending, by the second terminal, the reconstruction information of the second signal to the first terminal in a wired connection communication manner, a device to device communication manner, or a wireless local area network communication manner. In this embodiment of the present invention, direct communication may also be performed in another implementable manner.

Therefore, according to the interference cancellation method provided in this embodiment of the present invention, reconstruction information of a signal sent by a second terminal to a base station by using a second resource is sent to a first terminal, so that the first terminal can estimate a channel parameter between the terminals, and cancellation of an interference signal that is in a signal received by using a first resource and that is between the terminals can be implemented according to the channel parameter and reconstruction information of a signal sent by the second terminal to the base station by using the first resource.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

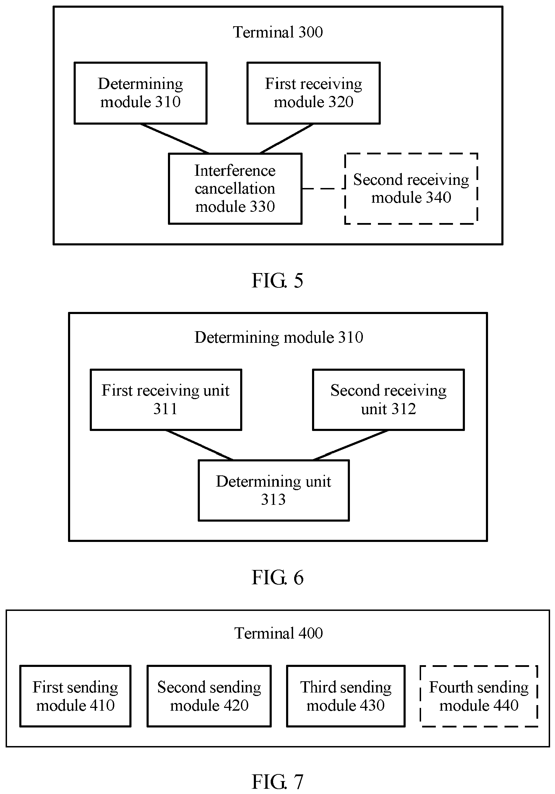

The foregoing describes in detail the interference cancellation methods according to the embodiments of the present invention with reference to FIG. 2 to FIG. 4, and the following describes terminals according to embodiments of the present invention with reference to FIG. 5 to FIG. 7.

FIG. 5 shows a schematic block diagram of a terminal 300 according to an embodiment of the present invention. As shown in FIG. 5, the terminal 300 includes:

a determining module 310, configured to determine a channel parameter from a transmit antenna of a second terminal to a receive antenna of the terminal 300;

a first receiving module 320, configured to receive a first signal by using a first resource, where the first signal includes a first interference signal and a wanted signal that is from a base station, and the first interference signal is an interference signal generated when the second terminal sends a second signal to the base station by using the first resource; and

an interference cancellation module 330, configured to determine, according to the channel parameter determined by the determining module 310, the first interference signal in the first signal received by the first receiving module 320, and cancel the first interference signal.

Therefore, the terminal provided in this embodiment of the present invention can implement, according to a channel parameter from a transmit antenna of a second terminal to a receive antenna of the terminal 300, cancellation of an interference signal that is in a signal received by using a first resource and that is between the terminals.

Optionally, as shown in FIG. 6, in an embodiment, the determining module 310 includes:

a first receiving unit 311, configured to receive a second interference signal by using a second resource, where the second interference signal is an interference signal generated when the second terminal sends a third signal to the base station by using the second resource, and no downlink signal to be sent to the terminal 300 exists in the second resource;

a second receiving unit 312, configured to receive reconstruction information that is of the third signal and sent by the second terminal, where a resource used by the second terminal to send the reconstruction information of the third signal is different from the second resource; and

a determining unit 313, configured to determine the channel parameter from the transmit antenna of the second terminal to the receive antenna of the terminal 300 according to the second interference signal received by the first receiving unit 311 and the reconstruction information that is of the third signal and received by the second receiving unit 312.

In a specific embodiment, when a power ratio of an interference signal to a wanted signal is greater than a first threshold and less than a second threshold, where the interference signal and the wanted signal are in a signal received by the terminal 300, the reconstruction information that is of the third signal and received by the second receiving unit 312 includes an unmodulated digital baseband signal and a modulation scheme that are corresponding to the third signal; the terminal 300 further includes: a second receiving module 340, configured to receive reconstruction information that is of the second signal and sent by the second terminal, where the reconstruction information of the second signal includes an unmodulated digital baseband signal and a modulation scheme that are corresponding to the second signal, and a resource used by the second terminal to send the reconstruction information of the second signal is different from the first resource; and the interference cancellation module 330 is specifically configured to: determine the first interference signal in the first signal according to the reconstruction information that is of the second signal and received by the second receiving module 340 and the channel parameter determined by the determining unit 313, and cancel the first interference signal.

Optionally, when linearity of a radio frequency channel is insufficient, the reconstruction information that is of the second signal and received by the second receiving module 340 further includes a non-linear estimation of a radio frequency channel of the second signal; and the reconstruction information that is of the third signal and received by the second receiving unit 312 further includes a non-linear estimation of a radio frequency channel of the third signal.

Optionally, in another specific embodiment, when a power ratio of an interference signal to a wanted signal is greater than or equal to a second threshold and less than or equal to a third threshold, where the interference signal and the wanted signal are in a signal received by the terminal 300, the reconstruction information that is of the third signal and received by the second receiving unit 312 includes an unmodulated digital baseband signal and a modulation scheme that are corresponding to the third signal.

Optionally, when linearity of a radio frequency channel is insufficient, the reconstruction information that is of the third signal and received by the second receiving unit 312 further includes a non-linear estimation of a radio frequency channel of the third signal; the terminal 300 further includes: a second receiving module 340, configured to receive reconstruction information that is of the second signal and sent by the second terminal, where the reconstruction information of the second signal includes a non-linear estimation of a radio frequency channel of the second signal, and a resource used by the second terminal to send the reconstruction information of the second signal is different from the first resource; and the interference cancellation module 330 is specifically configured to: determine the first interference signal in the first signal according to the reconstruction information that is of the second signal and received by the second receiving module 340 and the channel parameter determined by the determining unit 313, and cancel the first interference signal.

Optionally, in still another specific embodiment, when a power ratio of an interference signal to a wanted signal is greater than a third threshold, where the interference signal and the wanted signal are in a signal received by the terminal 300, the reconstruction information that is of the third signal and received by the second receiving unit 312 includes a radio frequency signal corresponding to the third signal; the terminal 300 further includes: a second receiving module 340, configured to receive reconstruction information that is of the second signal and sent by the second terminal, where the reconstruction information of the second signal includes a radio frequency signal corresponding to the second signal, and a resource used by the second terminal to send the reconstruction information of the second signal is different from the first resource; and the interference cancellation module 330 is specifically configured to: determine the first interference signal in the first signal according to the reconstruction information that is of the second signal and received by the second receiving module 340 and the channel parameter determined by the determining unit 313, and cancel the first interference signal.

It should be understood that the second receiving unit 312 of the terminal 300 may be specifically configured to receive, in a wired connection communication manner, a device to device communication manner, or a wireless local area network communication manner, the reconstruction information that is of the third signal and sent by the second terminal. The second receiving module 340 may be specifically configured to receive, in the wired connection communication manner, the device to device communication manner, or the wireless local area network communication manner, the reconstruction information that is of the second signal and sent by the second terminal.

Therefore, the terminal that is provided in this embodiment of the present invention and used for interference cancellation can accurately estimate a channel parameter between terminals according to reconstruction information of a signal sent by a second terminal to a base station by using a first resource. The channel parameter between the terminals is applied to interference cancellation of a signal received by using the first resource, so that a better interference cancellation effect can be obtained.

FIG. 7 shows a schematic block diagram of a terminal 400 according to an embodiment of the present invention. As shown in FIG. 7, the terminal 400 includes:

a first sending module 410, configured to send a third signal to a base station by using a second resource, where there is no downlink signal to be sent to a first terminal by using the second resource, and the first terminal receives, by using the second resource, a second interference signal generated by the third signal;

a second sending module 420, configured to send reconstruction information of the third signal to the first terminal, so that the first terminal determines a channel parameter from a transmit antenna of the terminal 400 to a receive antenna of the first terminal according to the second interference signal and the reconstruction information of the third signal, where a resource used by the terminal 400 to send the reconstruction information of the third signal is different from the second resource; and

a third sending module 430, configured to send a second signal to the base station by using the first resource, where the first terminal receives a first signal by using the first resource, the first signal includes a first interference signal and a wanted signal that is from the base station, and the first interference signal is an interference signal generated when the terminal 400 sends the second signal to the base station by using the first resource.

Therefore, the terminal provided in this embodiment of the present invention sends, to a first terminal, reconstruction information of a signal sent by the terminal to a base station by using a second resource, so that the first terminal can estimate a channel parameter between the terminals, and cancellation of an interference signal that is in a signal received by using a first resource and that is between the terminals can be implemented by applying the channel parameter in interference cancellation of the signal received by using the first resource.

In an embodiment, the reconstruction information that is of the third signal and sent by the second sending module 420 includes an unmodulated digital baseband signal and a modulation scheme that are corresponding to the third signal; and the terminal 400 further includes: a fourth sending module 440, configured to send reconstruction information of the second signal to the first terminal, where the reconstruction information of the second signal includes an unmodulated digital baseband signal and a modulation scheme that are corresponding to the second signal.

Optionally, when linearity of a radio frequency channel is insufficient, the reconstruction information that is of the second signal and sent by the fourth sending module 440 further includes a non-linear estimation of a radio frequency channel of the second signal; and the reconstruction information that is of the third signal and sent by the second sending module 420 further includes a non-linear estimation of a radio frequency channel of the third signal.

Optionally, in another embodiment, the reconstruction information that is of the third signal and sent by the second sending module 420 includes an unmodulated digital baseband signal and a modulation scheme that are corresponding to the third signal.

Optionally, the reconstruction information that is of the third signal and sent by the second sending module 420 further includes a non-linear estimation of a radio frequency channel of the third signal; and the terminal 400 further includes: a fourth sending module 440, configured to send reconstruction information of the second signal to the first terminal, where the reconstruction information of the second signal includes a non-linear estimation of a radio frequency channel of the second signal.

Optionally, in still another embodiment, the reconstruction information that is of the third signal and sent by the second sending module 420 includes a radio frequency signal corresponding to the third signal; and the terminal 400 further includes: a fourth sending module 440, configured to send reconstruction information of the second signal to the first terminal, where the reconstruction information of the second signal includes a radio frequency signal corresponding to the second signal.

It should be understood that the second sending module 420 may be specifically configured to send the reconstruction information of the third signal to the first terminal in a wired connection communication manner, a device to device communication manner, or a wireless local area network communication manner. The fourth sending module 440 may be specifically configured to send the reconstruction information of the second signal to the first terminal in the wired connection communication manner, the device to device communication manner, or the wireless local area network communication manner.

Therefore, the terminal provided in this embodiment of the present invention sends, to a first terminal, reconstruction information of a signal sent by the terminal to a base station by using a second resource, so that the first terminal can estimate a channel parameter between the terminals, and cancellation of an interference signal that is in a signal received by using a first resource and that is between the terminals can be implemented by applying the channel parameter in interference cancellation of the signal received by using the first resource.

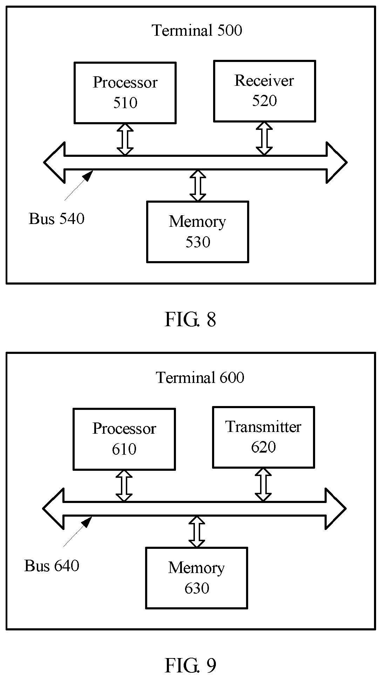

FIG. 8 shows a schematic block diagram of a terminal 500 according to another embodiment of the present invention. As shown in FIG. 8, the terminal 500 includes a processor 510, a receiver 520, a memory 530, and a bus 540. The processor 510, the receiver 520, and the memory 530 are connected to each other by using the bus system 540, the memory 530 is configured to store an instruction, and the processor 510 is configured to execute the instruction stored by the memory 530. The receiver 520 is configured to:

receive a first signal by using a first resource, where the first signal includes a first interference signal and a wanted signal that is from a base station, and the first interference signal is an interference signal generated when a second terminal sends a second signal to the base station by using the first resource.

The processor 510 is configured to:

determine a channel parameter from a transmit antenna of the second terminal to a receive antenna of the terminal 500; and
determine the first interference signal in the first signal according to the channel parameter, and cancel the first interference signal.

Therefore, the terminal provided in this embodiment of the present invention can implement, according to a channel parameter from a transmit antenna of a second terminal to a receive antenna of the terminal 500, cancellation of an interference signal that is in a signal received by using a first resource and that is between the terminals.

It should be understood that in this embodiment of the present invention, the processor 510 may be a central processing unit (CPU, Central Processing Unit), or the processor 510 may be another general-purpose processor, a digital signal processor (DSP), an application-specific integrated circuit (ASIC), a field programmable gate array (FPGA) or another programmable logic device, a discrete gate or transistor logic device, a discrete hardware assembly, or the like. The general-purpose processor may be a microprocessor or the processor may be any conventional processor, or the like.

The memory 530 may include a read-only memory and a random access memory, and provide an instruction and data for the processor 510. A part of the memory 530 may further include a non-volatile random access memory. For example, the memory 530 may further store information about a device type.

In addition to a data bus, the bus system 540 may further include a power bus, a control bus, a status signal bus, and the like. However, for clarity of description, various buses are marked as the bus system 540 in the figure.

In an implementation process, the steps in the foregoing method may be completed by using an integrated logic circuit of hardware in the processor 510 or an instruction in a form of software. Steps of the methods disclosed with reference to the embodiments of the present invention may be directly executed and completed by a hardware processor, or may be executed and completed by using a combination of hardware and software modules in the processor. The software module may be located in a storage medium mature in the art, such as a random access memory, a flash memory, a read-only memory, a programmable read-only memory, an electrically erasable programmable memory, or a register. The storage medium is located in the memory 530. The processor 510 reads information in the memory 530, and completes the steps of the foregoing method in combination with hardware of the processor 510. To avoid repetition, details are not described herein.

In an embodiment, that the processor 510 determines the channel parameter from the transmit antenna of the second terminal to the receive antenna of the terminal 500 includes:

receiving a second interference signal by using a second resource, where the second interference signal is an interference signal generated when the second terminal sends a third signal to the base station by using the second resource, and no downlink signal to be sent to the terminal 500 exists in the second resource;

receiving reconstruction information that is of the third signal and sent by the second terminal, where a resource used by the second terminal to send the reconstruction information of the third signal is different from the second resource; and

determining the channel parameter from the transmit antenna of the second terminal to the receive antenna of the terminal 500 according to the second interference signal and the reconstruction information of the third signal.

In a specific embodiment, when a power ratio of an interference signal to a wanted signal is greater than a first threshold and less than a second threshold, where the interference signal and the wanted signal are in a signal received by the terminal 500, the reconstruction information of the third signal includes an unmodulated digital baseband signal and a modulation scheme that are corresponding to the third signal.

Before the processor 510 determines the first interference signal in the first signal according to the channel parameter and cancels the first interference signal, the receiver 520 is further configured to:
receive reconstruction information that is of the second signal and sent by the second terminal, where the reconstruction information of the second signal includes an unmodulated digital baseband signal and a modulation scheme that are corresponding to the second signal, and a resource used by the second terminal to send the reconstruction information of the second signal is different from the first resource.

The processor 510 is further specifically configured to:
determine the first interference signal in the first signal according to the reconstruction information of the second signal and the channel parameter, and cancel the first interference signal.

Optionally, when linearity of a radio frequency channel is insufficient, the reconstruction information of the second signal further includes a non-linear estimation of a radio frequency channel of the second signal; and the reconstruction information of the third signal further includes a non-linear estimation of a radio frequency channel of the third signal.

In another specific embodiment, when a power ratio of an interference signal to a wanted signal is greater than or equal to a second threshold and less than or equal to a third threshold, where the interference signal and the wanted signal are in a signal received by the terminal 500, the reconstruction information of the third signal includes an unmodulated digital baseband signal and a modulation scheme that are corresponding to the third signal.

Optionally, when linearity of a radio frequency channel is insufficient, the reconstruction information of the third signal further includes a non-linear estimation of a radio frequency channel of the third signal.

Before the processor 510 determines the first interference signal in the first signal according to the channel parameter and cancels the first interference signal, the receiver 520 is further configured to:
receive reconstruction information that is of the second signal and sent by the second terminal, where the reconstruction information of the second signal includes a non-linear estimation of a radio frequency channel of the second signal, and a resource used by the second terminal to send the reconstruction information of the second signal is different from the first resource.

The processor 510 is further specifically configured to:
determine the first interference signal in the first signal according to the reconstruction information of the second signal and the channel parameter, and cancel the first interference signal.

Optionally, in still another specific embodiment, when a power ratio of an interference signal to a wanted signal is greater than a third threshold, where the interference signal and the wanted signal are in a signal received by the terminal 500, the reconstruction information of the third signal includes a radio frequency signal corresponding to the third signal.

Before the processor 510 determines the first interference signal in the first signal according to the channel parameter and cancels the first interference signal, the receiver 520 is further configured to:
receive reconstruction information that is of the second signal and sent by the second terminal, where the reconstruction information of the second signal includes a radio frequency signal corresponding to the second signal, and a resource used by the second terminal to send the reconstruction information of the second signal is different from the first resource.

The processor 510 is further specifically configured to:
determine the first interference signal in the first signal according to the reconstruction information of the second signal and the channel parameter, and cancel the first interference signal.

It should be understood that the receiver 520 may receive, in a wired connection communication manner, a device to device communication manner, or a wireless local area network communication manner, the reconstruction information that is of the second signal and sent by the second terminal and/or the reconstruction information that is of the third signal and sent by the second terminal, and no limitation is imposed herein in this embodiment of the present invention.

It should further be understood that the terminal 500 according to this embodiment of the present invention may correspond to an execution body of the method in the embodiment of the present invention, or may correspond to the terminal 300 according to the embodiment of the present invention, and the foregoing and other operations and/or functions of the modules of the terminal 500 are used to implement corresponding procedures of the methods in FIG. 2 and FIG. 3. For brevity, details are not described herein.

Therefore, the terminal that is provided in this embodiment of the present invention and used for interference cancellation can accurately estimate a channel parameter between terminals according to reconstruction information of a signal sent by a second terminal to a base station by using a first resource. The channel parameter between the terminals is applied to interference cancellation of a signal received by using the first resource, so that a better interference cancellation effect can be obtained.

FIG. 9 shows a schematic block diagram of a terminal 600 according to another embodiment of the present invention. As shown in FIG. 9, the terminal 600 includes a processor 610, a transmitter 620, a memory 630, and a bus 640. The processor 610, the transmitter 620, and the memory 630 are connected to each other by using the bus system 640, the memory 630 is configured to store an instruction, and the processor 610 is configured to execute the instruction stored by the memory 630. The transmitter 620 is configured to:

> send a third signal to a base station by using a second resource, where there is no downlink signal to be sent to a first terminal by using the second resource, and the first terminal receives, by using the second resource, a second interference signal generated by the third signal;
> send reconstruction information of the third signal to the first terminal, so that the first terminal determines a channel parameter from a transmit antenna of the terminal 600 to a receive antenna of the first terminal according to the second interference signal and the reconstruction information of the third signal, where a resource used by the terminal 600 to send the reconstruction information of the third signal is different from the second resource; and
> send a second signal to the base station by using the first resource, where the first terminal receives a first signal by using a first resource, the first signal includes a first interference signal and a wanted signal that is from the base station, and the first interference signal is an interference signal generated when the terminal 600 sends the second signal to the base station by using the first resource.

Therefore, the terminal provided in this embodiment of the present invention sends, to a first terminal, reconstruction information of a signal sent by the terminal to a base station by using a second resource, so that the first terminal can estimate a channel parameter between the terminals, and cancellation of an interference signal that is in a signal received by using a first resource and that is between the terminals can be implemented by applying the channel parameter in interference cancellation of the signal received by using the first resource.

It should be understood that in this embodiment of the present invention, the processor 610 may be a central processing unit (Central Processing Unit, CPU), or the processor 610 may be another general-purpose processor, a digital signal processor (DSP), an application-specific integrated circuit (ASIC), a field programmable gate array (FPGA) or another programmable logic device, a discrete gate or transistor logic device, a discrete hardware assembly, or the like. The general-purpose processor may be a microprocessor or the processor may be any conventional processor, or the like.

The memory 630 may include a read-only memory and a random access memory, and provide an instruction and data for the processor 610. A part of the memory 630 may further include a non-volatile random access memory. For example, the memory 630 may further store information about a device type.

In addition to a data bus, the bus system 640 may further include a power bus, a control bus, a status signal bus, and the like. However, for clarity of description, various buses are marked as the bus system 640 in the figure.

In an implementation process, the steps in the foregoing method may be completed by using an integrated logic circuit of hardware in the processor 610 or an instruction in a form of software. Steps of the methods disclosed with reference to the embodiments of the present invention may be directly executed and completed by a hardware processor, or may be executed and completed by using a combination of hardware and software modules in the processor. The software module may be located in a storage medium mature in the art, such as a random access memory, a flash memory, a read-only memory, a programmable read-only memory, an electrically erasable programmable memory, or a register. The storage medium is located in the memory 630. The processor 610 reads information in the memory 630, and completes the steps of the foregoing method in combination with hardware of the processor 610. To avoid repetition, details are not described herein.

In an embodiment, the reconstruction information that is of the third signal and sent by the transmitter 620 includes an unmodulated digital baseband signal and a modulation scheme that are corresponding to the third signal; and the transmitter 620 is further configured to send reconstruction information of the second signal to the first terminal, where the reconstruction information of the second signal includes an unmodulated digital baseband signal and a modulation scheme that are corresponding to the second signal.

Optionally, when linearity of a radio frequency channel is insufficient, the reconstruction information that is of the second signal and sent by the transmitter 620 further includes a non-linear estimation of a radio frequency channel of the second signal; and the reconstruction information that is of the third signal and sent by the transmitter 620 further includes a non-linear estimation of a radio frequency channel of the third signal.

Optionally, in another embodiment, the reconstruction information that is of the third signal and sent by the transmitter 620 includes an unmodulated digital baseband signal and a modulation scheme that are corresponding to the third signal.

Optionally, when linearity of a radio frequency channel is insufficient, the reconstruction information that is of the third signal and sent by the transmitter 620 further includes a non-linear estimation of a radio frequency channel of the third signal; and the transmitter 620 is further configured to send reconstruction information of the second signal to the first terminal, where the reconstruction information of the second signal includes a non-linear estimation of a radio frequency channel of the second signal.

Optionally, in still another embodiment, the reconstruction information that is of the third signal and sent by the transmitter 620 includes a radio frequency signal corresponding to the third signal; and the transmitter 620 is further configured to:
send reconstruction information of the second signal to the first terminal, where the reconstruction information of the second signal includes a radio frequency signal corresponding to the second signal.

It should be understood that the transmitter 620 may send the reconstruction information of the third signal to the first terminal and/or send the reconstruction information of the second signal to the first terminal in a wired connection communication manner, a device to device communication manner, or a wireless local area network communication manner, and no limitation is imposed herein in this embodiment of the present invention.

It should be understood that the terminal 600 according to this embodiment of the present invention may correspond to an execution body of the method in the embodiment of the present invention, or may correspond to the terminal 400 according to the embodiment of the present invention, and the foregoing and other operations and/or functions of the modules of the terminal 600 are used to implement corresponding procedures of the methods in FIG. 2 and FIG. 3. For brevity, details are not described herein.

Therefore, the terminal provided in this embodiment of the present invention sends, to a first terminal, reconstruction information of a signal sent by the terminal to a base station by using a second resource, so that the first terminal can estimate a channel parameter between the terminals, and cancellation of an interference signal that is in a signal received by using a first resource and that is between the terminals can be implemented by applying the channel parameter in interference cancellation of the signal received by using the first resource.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Therefore, the protection scope of the present invention shall be subject to the protection scope of the claims.

## Claims

1. An interference cancellation method, **characterized by** comprising:

     Determining (S110), by a first terminal, a channel parameter from a transmit antenna of a second terminal to a receive antenna of the first terminal;
     Receiving (S120), by the first terminal, a first signal by using a first resource, wherein the first signal comprises a first interference signal and a wanted signal that is from a base station, and the first interference signal is an interference signal generated when the second terminal sends a second signal to the base station by using the first resource; and
     Determining (S130), by the first terminal, the first interference signal in the first signal according to the channel parameter, and canceling the first interference signal;
     wherein the determining, by a first terminal, a channel parameter from a transmit antenna of a second terminal to a receive antenna of the first terminal comprises:

     receiving (S111), by the first terminal, a second interference signal by using a second resource, wherein the second interference signal is an interference signal generated when the second terminal sends a third signal to the base station by using the second resource, and there is no downlink signal to be sent to the first terminal by using the second resource;
     receiving (S112), by the first terminal, reconstruction information that is of the third signal and sent by the second terminal, wherein a resource used by the second terminal to send the reconstruction information of the third signal is different from the second resource; and
     determining (S113), by the first terminal, the channel parameter from the transmit antenna of the second terminal to the receive antenna of the first terminal according to the second interference signal and the reconstruction information of the third signal;
     wherein when a power ratio of an interference signal to a wanted signal is greater than or equal to a second threshold and less than or equal to a third threshold, wherein the interference signal and the wanted signal are in a signal received by the first terminal, the reconstruction information of the third signal comprises:
     an unmodulated digital baseband signal and a modulation scheme that are corresponding to the third signal.

2. The method according to claim 1, wherein when a power ratio of an interference signal to a wanted signal is greater than a first threshold and less than a second threshold, wherein the interference signal and the wanted signal are in a signal received by the first terminal, the reconstruction information of the third signal comprises an unmodulated digital baseband signal and a modulation scheme that are corresponding to the third signal; before the determining, by the first terminal, the first interference signal in the first signal according to the channel parameter, and canceling the first interference signal, the method further comprises:

     receiving, by the first terminal, reconstruction information that is of the second signal and sent by the second terminal, wherein the reconstruction information of the second signal comprises an unmodulated digital baseband signal and a modulation scheme that are corresponding to the second signal, and a resource used by the second terminal to send the reconstruction information of the second signal is different from the first resource; and

the determining, by the first terminal, the first interference signal in the first signal according to the channel parameter, and canceling the first interference signal comprises:

determining, by the first terminal, the first interference signal in the first signal according to the reconstruction information of the second signal and the channel parameter, and canceling the first interference signal.

3. The method according to claim 1, wherein when a power ratio of an interference signal to a wanted signal is greater than a third threshold, wherein the interference signal and the wanted signal are in a signal received by the first terminal, the reconstruction information of the third signal comprises a radio frequency signal corresponding to the third signal; and before the determining, by the first terminal, the first interference signal in the first signal according to the channel parameter, and canceling the first interference signal, the method further comprises:

receiving, by the first terminal, reconstruction information that is of the second signal and sent by the second terminal, wherein the reconstruction information of the second signal comprises a radio frequency signal corresponding to the second signal, and a resource used by the second terminal to send the reconstruction information of the second signal is different from the first resource; and the determining, by the first terminal, the first interference signal in the first signal according to the channel parameter, and canceling the first interference signal comprises:
determining, by the first terminal, the first interference signal in the first signal according to the reconstruction information of the second signal and the channel parameter, and canceling the first interference signal.

4. An interference cancellation method, **characterized by** comprising:

Sending (S210), by a second terminal, a third signal to a base station by using a second resource, wherein there is no downlink signal to be sent to a first terminal by using the second resource, and the first terminal receives, by using the second resource, a second interference signal generated by the third signal;
Sending (S220), by the second terminal, reconstruction information of the third signal to the first terminal, so that the first terminal determines a channel parameter from a transmit antenna of the second terminal to a receive antenna of the first terminal according to the second interference signal and the reconstruction information of the third signal, wherein a resource used by the second terminal to send the reconstruction information of the third signal is different from the second resource; and
Sending (S230), by the second terminal, a second signal to the base station by using the first resource, wherein the first terminal receives a first signal by using the first resource, the first signal comprises a first interference signal and a wanted signal that is from the base station, and the first interference signal is an interference signal generated when the second terminal sends the second signal to the base station by using the first resource.

5. The method according to claim 4, wherein the reconstruction information of the third signal comprises an unmodulated digital baseband signal and a modulation scheme that are corresponding to the third signal; and
the method further comprises:
sending, by the second terminal, reconstruction information of the second signal to the first terminal, wherein the reconstruction information of the second signal comprises an unmodulated digital baseband signal and a modulation scheme that are corresponding to the second signal.

6. The method according to claim 4, wherein the reconstruction information of the third signal comprises a radio frequency signal corresponding to the third signal; and
the method further comprises:
sending, by the second terminal, reconstruction information of the second signal to the first terminal, wherein the reconstruction information of the second signal comprises a radio frequency signal corresponding to the second signal.

7. A terminal, **characterized by** comprising:

a determining module (310), configured to determine a channel parameter from a transmit antenna of a second terminal to a receive antenna of the terminal;
a first receiving module (320), configured to receive a first signal by using a first resource, wherein the first signal comprises a first interference signal and a wanted signal that is from a base station, and the first interference signal is an interference signal generated when the second terminal sends a second signal to the base station by using the first resource; and
an interference cancellation module (330), configured to determine, according to the channel parameter determined by the determining module (310), the first interference signal in the first signal received by the first receiving module

(320), and cancel the first interference signal;
wherein the determining module (310) comprises:

> a first receiving unit (311), configured to receive a second interference signal by using a second resource, wherein the second interference signal is an interference signal generated when the second terminal sends a third signal to the base station by using the second resource, and no downlink signal to be sent to the terminal exists in the second resource;
> a second receiving unit (312), configured to receive reconstruction information that is of the third signal and sent by the second terminal, wherein a resource used by the second terminal to send the reconstruction information of the third signal is different from the second resource; and
> a determining unit (313), configured to determine the channel parameter from the transmit antenna of the second terminal to the receive antenna of the terminal according to the second interference signal and the reconstruction information of the third signal;
> wherein when a power ratio of an interference signal to a wanted signal is greater than or equal to a second threshold and less than or equal to a third threshold, wherein the interference signal and the wanted signal are in a signal received by the terminal, the reconstruction information that is of the third signal and received by the second receiving unit (312) comprises:
> an unmodulated digital baseband signal and a modulation scheme that are corresponding to the third signal.

8. The terminal according to claim 7, wherein when a power ratio of an interference signal to a wanted signal is greater than a first threshold and less than a second threshold, wherein the interference signal and the wanted signal are in a signal received by the terminal, the reconstruction information that is of the third signal and received by the second receiving unit (312) comprises an unmodulated digital baseband signal and a modulation scheme that are corresponding to the third signal; the terminal further comprises:

> a second receiving module (340), configured to receive reconstruction information that is of the second signal and sent by the second terminal, wherein the reconstruction information of the second signal comprises an unmodulated digital baseband signal and a modulation scheme that are corresponding to the second signal, and a resource used by the second terminal to send the reconstruction information of the second signal is different from the first resource; and
the interference cancellation module (330) is specifically configured to:
determine the first interference signal in the first signal according to the reconstruction information that is of the second signal and received by the second receiving module (340) and the channel parameter determined by the determining unit (313), and cancel the first interference signal.

9. The terminal according to claim 7, wherein when a power ratio of an interference signal to a wanted signal is greater than a third threshold, wherein the interference signal and the wanted signal are in a signal received by the terminal, the reconstruction information that is of the third signal and received by the second receiving unit (312) comprises a radio frequency signal corresponding to the third signal; the terminal further comprises:

> a second receiving module (340), configured to receive reconstruction information that is of the second signal and sent by the second terminal, wherein the reconstruction information of the second signal comprises a radio frequency signal corresponding to the second signal, and a resource used by the second terminal to send the reconstruction information of the second signal is different from the first resource; and
> the interference cancellation module (330) is specifically configured to:
> determine the first interference signal in the first signal according to the reconstruction information that is of the second signal and received by the second receiving module (340) and the channel parameter determined by the determining unit (313), and cancel the first interference signal.

10. A terminal, **characterized by** comprising:

> a first sending module (410), configured to send a third signal to a base station by using a second resource, wherein there is no downlink signal to be sent to a first terminal by using the second resource, and the first terminal receives, by using the second resource, a second interference signal generated by the third signal;
> a second sending module (420), configured to send reconstruction information of the third signal to the first terminal, so that the first terminal determines a channel parameter from a transmit antenna of the terminal to a receive antenna of the first terminal according to the second interference signal and the reconstruction information of the third signal, wherein a resource used by the terminal to send the reconstruction information of the third signal is different from the second resource; and

a third sending module (430), configured to send a second signal to the base station by using the first resource, wherein the first terminal receives a first signal by using the first resource, the first signal comprises a first interference signal and a wanted signal that is from the base station, and the first interference signal is an interference signal generated when the terminal sends the second signal to the base station by using the first resource.

11. The terminal according to claim 10, wherein the reconstruction information that is of the third signal and sent by the second sending module (420) comprises an unmodulated digital baseband signal and a modulation scheme that are corresponding to the third signal; and

the terminal further comprises:

a fourth sending module (440), configured to send reconstruction information of the second signal to the first terminal, wherein the reconstruction information of the second signal comprises an unmodulated digital baseband signal and a modulation scheme that are corresponding to the second signal.

12. The terminal according to claim 10, wherein the reconstruction information that is of the third signal and sent by the second sending module (420) comprises a radio frequency signal corresponding to the third signal; and

the terminal further comprises:

a fourth sending module (440), configured to send reconstruction information of the second signal to the first terminal, wherein the reconstruction information of the second signal comprises a radio frequency signal corresponding to the second signal.

**Patentansprüche**

1. Störungsunterdrückungsverfahren, **dadurch gekennzeichnet, dass** es Folgendes umfasst:

Bestimmen (S110), durch ein erstes Endgerät, eines Kanalparameters von einer Sendeantenne eines zweiten Endgeräts zu einer Empfangsantenne des ersten Endgeräts;

Empfangen (S120), durch das erste Endgerät, eines ersten Signals durch Verwenden einer ersten Ressource, wobei das erste Signal ein erstes Störungssignal und ein gewolltes Signal, das von einer Basisstation stammt, umfasst und das erste Störungssignal ein Störungssignal ist, das erzeugt wird, wenn das zweite Endgerät ein zweites Signal durch Verwenden der ersten Ressource an die Basisstation sendet; und

Bestimmen (S130), durch das erste Endgerät, des ersten Störungssignals in dem ersten Signal gemäß dem Kanalparameter und Unterdrücken des ersten Störungssignals;

wobei das Bestimmen, durch ein erstes Endgerät, eines Kanalparameters von einer Sendeantenne eines zweiten Endgeräts zu einer Empfangsantenne des ersten Endgeräts Folgendes umfasst:

Empfangen (S111), durch das erste Endgerät, eines zweiten Störungssignals durch Verwenden einer zweiten Ressource, wobei das zweite Störungssignal ein Störungssignal ist, das erzeugt wird, wenn das zweite Endgerät ein drittes Signal durch Verwenden der zweiten Ressource an die Basisstation sendet, und es kein Downlink-Signal gibt, das an das erste Endgerät durch Verwenden der zweiten Ressource zu senden ist;

Empfangen (S112), durch das erste Endgerät, von Rekonstruktionsinformationen, die von dem dritten Signal stammen und durch das zweite Endgerät gesendet werden, wobei eine durch das zweite Endgerät zum Senden der Rekonstruktionsinformationen des dritten Signals verwendete Ressource verschieden von der zweiten Ressource ist; und

Bestimmen (S113), durch das erste Endgerät, des Kanalparameters von der Sendeantenne des zweiten Endgeräts an die Empfangsantenne des ersten Endgeräts gemäß dem zweiten Störungssignal und Rekonstruktionsinformationen des dritten Signals;

wobei, wenn ein Leistungsverhältnis eines Störungssignals zu einem gewollten Signal größer oder gleich einer zweiten Schwelle und kleiner oder gleich einer dritten Schwelle ist, wobei das Störungssignal und das gewollte Signal in einem durch das erste Endgerät empfangenen Signal sind, die Rekonstruktionsinformationen des dritten Signals Folgendes umfassen:

ein nichtmoduliertes digitales Basisbandsignal und ein Modulationsschema, die dem dritten Signal entsprechen.

2. Verfahren nach Anspruch 1, wobei, wenn ein Leistungsverhältnis eines Störungssignals zu einem gewollten Signal größer als eine erste Schwelle und geringer als eine zweite Schwelle ist, wobei das Störungssignal und das gewollte Signal in einem durch das erste Endgerät empfangenen Signal sind, die Rekonstruktionsinformationen des dritten Signals ein nichtmoduliertes digitales Basisbandsignal und ein Modulationsschema umfassen, die dem dritten Signal entsprechen;

das Verfahren vor dem Bestimmen, durch das erste Endgerät, des ersten Störungssignals in dem ersten Signal gemäß dem Kanalparameter und Unterdrücken des ersten Störungssignals ferner Folgendes umfasst:

Empfangen, durch das erste Endgerät, von Rekonstruktionsinformationen, die von dem zweiten Signal stammen und durch das zweite Endgerät gesendet werden, wobei die Rekonstruktionsinformationen des zweiten Signals ein nichtmoduliertes digitales Basisbandsignal und ein Modulationsschema umfassen, die dem zweiten Signal entsprechen, und eine durch das zweite Endgerät zum Senden der Rekonstruktionsinformationen des zweiten Signals verwendete Ressource von der ersten Ressource verschieden ist; und

das Bestimmen, durch das erste Endgerät, des ersten Störungssignals in dem ersten Signal gemäß dem Kanalparameter und Unterdrücken des ersten Störungssignals Folgendes umfasst: Bestimmen, durch das erste Endgerät, des ersten Störungssignals in dem ersten Signal gemäß den Rekonstruktionsinformationen des zweiten Signals und dem Kanalparameter und Unterdrücken des ersten Störungssignals.

3. Verfahren nach Anspruch 1, wobei, wenn ein Leistungsverhältnis eines Störungssignals zu einem gewollten Signal größer als eine dritte Schwelle ist, wobei das Störungssignal und das gewollte Signal in einem durch das erste Endgerät empfangenen Signal sind, die Rekonstruktionsinformationen des dritten Signals ein Hochfrequenzsignal umfassen, das dem dritten Signal entspricht; und

das Verfahren vor dem Bestimmen, durch das erste Endgerät, des ersten Störungssignals in dem ersten Signal gemäß dem Kanalparameter und Unterdrücken des ersten Störungssignals ferner Folgendes umfasst:

Empfangen, durch das erste Endgerät, von Rekonstruktionsinformationen, die von dem zweiten Signal stammen und durch das zweite Endgerät gesendet werden, wobei die Rekonstruktionsinformationen des zweiten Signals ein Hochfrequenzsignal umfassen,

das dem zweiten Signal entspricht, und eine durch das zweite Endgerät zum Senden der Rekonstruktionsinformationen des zweiten Signals verwendete Ressource von der ersten Ressource verschieden ist; und

das Bestimmen, durch das erste Endgerät, des ersten Störungssignals in dem ersten Signal gemäß dem Kanalparameter und Unterdrücken des ersten Störungssignals Folgendes umfasst: Bestimmen, durch das erste Endgerät, des ersten Störungssignals in dem ersten Signal gemäß den Rekonstruktionsinformationen des zweiten Signals und dem Kanalparameter und Unterdrücken des ersten Störungssignals.

4. Störungsunterdrückungsverfahren, **dadurch gekennzeichnet, dass** es Folgendes umfasst:

Senden (S210), durch ein zweites Endgerät, eines dritten Signals an eine Basisstation durch Verwenden einer zweiten Ressource, wobei es kein durch Verwenden der zweiten Ressource an ein erstes Endgerät zu sendendes Downlink-Signal gibt und das erste Endgerät ein durch das dritte Signal erzeugtes zweites Störungssignal durch Verwenden der zweiten Ressource empfängt;

Senden (S220), durch das zweite Endgerät, von Rekonstruktionsinformationen des dritten Signals an das erste Endgerät, so dass das erste Endgerät einen Kanalparameter von einer Sendeantenne des zweiten Endgeräts zu einer Empfangsantenne des ersten Endgeräts gemäß dem zweiten Störungssignal und den Rekonstruktionsinformationen des dritten Signals bestimmt, wobei eine durch das zweite Endgerät zum Senden der Rekonstruktionsinformationen des dritten Signals verwendete Ressource von der zweiten Ressource verschieden ist; und

Senden (S230), durch das zweite Endgerät, eines zweiten Signals an die Basisstation durch Verwenden der ersten Ressource, wobei das erste Endgerät ein erstes Signal durch Verwenden der ersten Ressource empfängt, das erste Signal ein erstes Störungssignal und ein gewolltes Signal umfasst, das von der Basisstation stammt, und das erste Störungssignal ein Störungssignal ist, das erzeugt wird, wenn das zweite Endgerät das zweite Signal durch Verwenden der ersten Ressource an die Basisstation sendet.

5. Verfahren nach Anspruch 4, wobei die Rekonstruktionsinformationen des dritten Signals ein nichtmoduliertes digitales Basisbandsignal und ein Modulationsschema umfassen, die dem dritten Signal entsprechen; und

das Verfahren ferner Folgendes umfasst:
Senden, durch das zweite Endgerät, von Rekonstruktionsinformationen des zweiten Signals an das erste Endgerät, wobei die Rekonstruktionsinformationen des zweiten Signals ein nichtmoduliertes digitales Basisbandsignal und ein Modulationsschema umfassen, die dem zweiten Signal entsprechen.

**6.** Verfahren nach Anspruch 4, wobei die Rekonstruktionsinformationen des dritten Signals ein Hochfrequenzsignal umfassen, das dem dritten Signal entspricht; und
das Verfahren ferner Folgendes umfasst:
Senden, durch das zweite Endgerät, von Rekonstruktionsinformationen des zweiten Signals an das erste Endgerät, wobei die Rekonstruktionsinformationen des zweiten Signals ein Hochfrequenzsignal umfassen, das dem zweiten Signal entspricht.

**7.** Endgerät, **dadurch gekennzeichnet, dass** es Folgendes umfasst:

ein Bestimmungsmodul (310), das zum Bestimmen eines Kanalparameters von einer Sendeantenne eines zweiten Endgeräts zu einer Empfangsantenne des Endgeräts konfiguriert ist;
ein erstes Empfangsmodul (320), das zum Empfangen eines ersten Signals durch Verwenden einer ersten Ressource konfiguriert ist, wobei das erste Signal ein erstes Störungssignal und ein gewolltes Signal, das von einer Basisstation stammt, umfasst und
das erste Störungssignal ein Störungssignal ist, das erzeugt wird, wenn das zweite Endgerät ein zweites Signal durch Verwenden der ersten Ressource an die Basisstation sendet; und
ein Störungsunterdrückungsmodul (330), das zum Bestimmen des ersten Störungssignals in dem ersten Signal, das durch das erste Empfangsmodul (320) empfangen wird, gemäß dem Kanalparameter, der durch das Bestimmungsmodul (310) bestimmt wird, und zum Unterdrücken des ersten Störungssignals konfiguriert ist;
wobei das Bestimmungsmodul (310) Folgendes umfasst:

eine erste Empfangseinheit (311), die zum Empfangen eines zweiten Störungssignals durch Verwenden einer zweiten Ressource konfiguriert ist, wobei das zweite Störungssignal ein Störungssignal ist, das erzeugt wird, wenn das zweite Endgerät ein drittes Signal durch Verwenden der zweiten Ressource an die Basisstation sendet, und
kein an das Endgerät zu sendendes Downlink-Signal in der zweiten Ressource existiert;
eine zweite Empfangseinheit (312), die zum Empfangen von Rekonstruktionsinformationen, die von dem dritten Signal stammen und durch das zweite Endgerät gesendet werden, konfiguriert ist, wobei eine durch das zweite Endgerät zum Senden der Rekonstruktionsinformationen des dritten Signals verwendete Ressource verschieden von der zweiten Ressource ist; und
eine Bestimmungseinheit (313), die zum Bestimmen des Kanalparameters von der Sendeantenne des zweiten Endgeräts an die Empfangsantenne des Endgeräts gemäß dem zweiten Störungssignal und den Rekonstruktionsinformationen des dritten Signals konfiguriert ist;
wobei, wenn ein Leistungsverhältnis eines Störungssignals zu einem gewollten Signal größer oder gleich einer zweiten Schwelle und kleiner oder gleich einer dritten Schwelle ist, wobei das Störungssignal und das gewollte Signal in einem durch das Endgerät empfangenen Signal sind, die Rekonstruktionsinformationen, die von dem dritten Signal stammen und durch die zweite Empfangseinheit (312) empfangen werden, Folgendes umfassen:
ein nichtmoduliertes digitales Basisbandsignal und ein Modulationsschema, die dem dritten Signal entsprechen.

**8.** Endgerät nach Anspruch 7, wobei, wenn ein Leistungsverhältnis eines Störungssignals zu einem gewollten Signal größer als eine erste Schwelle und geringer als eine zweite Schwelle ist, wobei das Störungssignal und das gewollte Signal in einem durch das Endgerät empfangenen Signal sind, die Rekonstruktionsinformationen, die von dem dritten Signal stammen und durch die zweite Empfangseinheit (312) empfangen werden, ein nichtmoduliertes digitales Basisbandsignal und ein Modulationsschema umfassen, die dem dritten Signal entsprechen;
das Endgerät ferner Folgendes umfasst:

ein zweites Empfangsmodul (340), das zum Empfangen von Rekonstruktionsinformationen, die von dem zweiten Signal stammen und durch das zweite Endgerät gesendet werden, konfiguriert ist, wobei die Rekonstruktionsinformationen des zweiten Signals ein nichtmoduliertes digitales Basisbandsignal und ein Modulationsschema umfassen, die dem zweiten Signal entsprechen, und eine durch das zweite Endgerät zum Senden der Rekonstruktionsinformationen des zweiten Signals verwendete Ressource von der ersten Ressource verschieden ist; und
das Störungsunterdrückungsmodul (330) speziell zu Folgendem konfiguriert ist:
Bestimmen des ersten Störungssignals in dem ersten Signal gemäß den Rekonstruktionsinformationen, die von dem zweiten Signal stammen und durch das zweite Empfangsmodul (340) empfangen werden, und dem Kanalparameter, der durch die Bestimmungseinheit (313) bestimmt wird, und Unterdrücken des ersten Störungssignals.

9. Endgerät nach Anspruch 7, wobei, wenn ein Leistungsverhältnis eines Störungssignals zu einem gewollten Signal größer als eine dritte Schwelle ist, wobei das Störungssignal und das gewollte Signal in einem durch das Endgerät empfangenen Signal sind, die Rekonstruktionsinformationen, die von dem dritten Signal stammen und durch die zweite Empfangseinheit (312) empfangen werden, ein Hochfrequenzsignal umfassen, das dem dritten Signal entspricht;
das Endgerät ferner Folgendes umfasst:

ein zweites Empfangsmodul (340), das zum Empfangen von Rekonstruktionsinformationen, die von dem zweiten Signal stammen und durch das zweite Endgerät gesendet werden, konfiguriert ist, wobei die Rekonstruktionsinformationen des zweiten Signals ein Hochfrequenzsignal umfassen,
das dem zweiten Signal entspricht, und eine durch das zweite Endgerät zum Senden der Rekonstruktionsinformationen des zweiten Signals verwendete Ressource von der ersten Ressource verschieden ist; und
das Störungsunterdrückungsmodul (330) speziell zu Folgendem konfiguriert ist:
Bestimmen des ersten Störungssignals in dem ersten Signal gemäß den Rekonstruktionsinformationen, die von dem zweiten Signal stammen und durch das zweite Empfangsmodul (340) empfangen werden, und dem Kanalparameter, der durch die Bestimmungseinheit (313) bestimmt wird, und Unterdrücken des ersten Störungssignals.

10. Endgerät, **dadurch gekennzeichnet, dass** es Folgendes umfasst:

ein erstes Sendemodul (410), das zum Senden eines dritten Signals an eine Basisstation durch Verwenden einer zweiten Ressource konfiguriert ist, wobei es kein durch Verwenden der zweiten Ressource an ein erstes Endgerät zu sendendes Downlink-Signal gibt und das erste Endgerät ein durch das dritte Signal erzeugtes zweites Störungssignal durch Verwenden der zweiten Ressource empfängt;
ein zweites Sendemodul (420), das zum Senden von Rekonstruktionsinformationen des dritten Signals an das erste Endgerät konfiguriert ist, so dass das erste Endgerät einen Kanalparameter von einer Sendeantenne des Endgeräts zu einer Empfangsantenne des ersten Endgeräts gemäß dem zweiten Störungssignal und den Rekonstruktionsinformationen des dritten Signals bestimmt, wobei eine durch das Endgerät zum Senden der Rekonstruktionsinformationen des dritten Signals verwendete Ressource von der zweiten Ressource verschieden ist; und
ein drittes Sendemodul (430), das zum Senden eines zweiten Signals an die Basisstation durch Verwenden der ersten Ressource konfiguriert ist, wobei das erste Endgerät ein erstes Signal durch Verwenden der ersten Ressource empfängt, das erste Signal ein erstes Störungssignal und ein gewolltes Signal umfasst, das von der Basisstation stammt, und
das erste Störungssignal ein Störungssignal ist, das erzeugt wird, wenn das Endgerät das zweite Signal durch Verwenden der ersten Ressource an die Basisstation sendet.

11. Endgerät nach Anspruch 10, wobei die Rekonstruktionsinformationen, die von dem dritten Signal stammen und durch das zweite Sendemodul (420) gesendet werden, ein nichtmoduliertes digitales Basisbandsignal und ein Modulationsschema umfassen, die dem dritten Signal entsprechen; und
das Endgerät ferner Folgendes umfasst:
ein viertes Sendemodul (440), das zum Senden von Rekonstruktionsinformationen des zweiten Signals an das erste Endgerät konfiguriert ist, wobei die Rekonstruktionsinformationen des zweiten Signals ein nichtmoduliertes digitales Basisbandsignal und ein Modulationsschema umfassen, die dem zweiten Signal entsprechen.

12. Endgerät nach Anspruch 10, wobei die Rekonstruktionsinformationen, die von dem dritten Signal stammen und durch das zweite Sendemodul (420) gesendet werden, ein Hochfrequenzsignal umfassen, das dem dritten Signal entspricht; und
das Endgerät ferner Folgendes umfasst:
ein viertes Sendemodul (440), das zum Senden von Rekonstruktionsinformationen des zweiten Signals an das erste Endgerät konfiguriert ist, wobei die Rekonstruktionsinformationen des zweiten Signals ein Hochfrequenzsignal umfassen, das dem zweiten Signal entspricht.

## Revendications

1. Procédé d'annulation d'interférence, **caractérisé en ce qu'il** comprend :

la détermination (S110), par un premier terminal, d'un paramètre de canal à partir d'une antenne d'émission d'un second terminal à une antenne de réception du premier terminal ;
la réception (S120), par le premier terminal, d'un premier signal en utilisant une première ressource, dans lequel le premier signal comprend un premier signal d'interférence et un signal voulu qui vient d'une station de base, et le premier signal d'interférence est un signal d'interférence généré lorsque le second terminal envoie un deuxième signal à la station de base en utilisant la première ressource ; et

la détermination (S130), par le premier terminal, du premier signal d'interférence dans le premier signal en fonction du paramètre de canal, et l'annulation du premier signal d'interférence ;

la détermination, par un premier terminal, d'un paramètre de canal à partir d'une antenne d'émission d'un second terminal à une antenne de réception du premier terminal comprenant :

la réception (S111), par le premier terminal, d'un deuxième signal d'interférence en utilisant une seconde ressource, dans lequel le deuxième signal d'interférence est un signal d'interférence généré lorsque le second terminal envoie un troisième signal à la station de base en utilisant la seconde ressource, et il n'existe aucun signal en liaison descendante à envoyer au premier terminal en utilisant la seconde ressource ;

la réception (S112), par le premier terminal, d'informations de reconstruction qui viennent du troisième signal et envoyées par le second terminal, dans lequel une ressource utilisée par le second terminal pour envoyer les informations de reconstruction du troisième signal est différente de la seconde ressource ; et

la détermination (S113), par le premier terminal, du paramètre de canal à partir de l'antenne d'émission du second terminal à l'antenne de réception du premier terminal en fonction du deuxième signal d'interférence et des informations de reconstruction du troisième signal ;

dans lequel lorsqu'un rapport de puissance d'un signal d'interférence par rapport à un signal voulu est supérieur ou égal à un deuxième seuil et inférieur ou égal à un troisième seuil, dans lequel le signal d'interférence et le signal voulu sont dans un signal reçu par le premier terminal, les informations de reconstruction du troisième signal comprennent :

un signal de bande de base numérique non modulé et un procédé de modulation qui correspondent au troisième signal.

2. Procédé selon la revendication 1, dans lequel lorsqu'un rapport de puissance d'un signal d'interférence par rapport à un signal voulu est supérieur à un premier seuil et inférieur à un deuxième seuil, dans lequel le signal d'interférence et le signal voulu sont dans un signal reçu par le premier terminal, les informations de reconstruction du troisième signal comprennent un signal de bande de base numérique non modulé et un procédé de modulation qui correspondent au troisième signal ;

avant la détermination, par le premier terminal, du premier signal d'interférence dans le premier signal en fonction du paramètre de canal, et l'annulation du premier signal d'interférence, le procédé comprend en outre :

la réception, par le premier terminal, d'informations de reconstruction qui viennent du deuxième signal et envoyées par le second terminal, dans lequel les informations de reconstruction du deuxième signal comprennent un signal de bande de base numérique non modulé et un procédé de modulation qui correspondent au deuxième signal, et une ressource utilisée par le deuxième terminal pour envoyer les informations de reconstruction du deuxième signal est différente de la première ressource ; et

la détermination, par le premier terminal, du premier signal d'interférence dans le premier signal en fonction du paramètre de canal, et l'annulation du premier signal d'interférence comprend :

la détermination, par le premier terminal, du premier signal d'interférence dans le premier signal en fonction des informations de reconstruction du deuxième signal et du paramètre de canal, et l'annulation du premier signal d'interférence.

3. Procédé selon la revendication 1, dans lequel lorsqu'un rapport de puissance d'un signal d'interférence par rapport à un signal voulu est supérieur à un troisième seuil, dans lequel le signal d'interférence et le signal voulu sont dans un signal reçu par le premier terminal, les informations de reconstruction du troisième signal comprennent un signal de radiofréquences correspondant au troisième signal ; et

avant la détermination, par le premier terminal, du premier signal d'interférence dans le premier signal en fonction du paramètre de canal, et l'annulation du premier signal d'interférence, le procédé comprend en outre :

la réception, par le premier terminal, d'informations de reconstruction qui viennent du deuxième signal et envoyées par le second terminal, dans lequel les informations de reconstruction du deuxième signal comprennent un signal de radiofréquences correspondant au deuxième signal, et une ressource utilisée par le second terminal pour envoyer les informations de reconstruction du deuxième signal est différente de la première ressource ; et

la détermination, par le premier terminal, du premier signal d'interférence dans le premier signal en fonction du paramètre de canal, et l'annulation du premier signal d'interférence comprend : la détermination, par le premier terminal, du premier signal d'interférence dans le premier signal en fonction des informations de reconstruction du deuxième signal et du paramètre de canal, et l'annulation du premier signal d'interférence.

**4.** Procédé d'annulation d'interférence, **caractérisé en ce qu'**il comprend :

l'envoi (S210), par un second terminal, d'un troisième signal à une station de base en utilisant une seconde ressource, dans lequel il n'existe aucun signal en liaison descendante à envoyer à un premier terminal en utilisant la seconde ressource, et le premier terminal reçoit, en utilisant la seconde ressource, un deuxième signal d'interférence généré par le troisième signal ;

l'envoi (S220), par le second terminal, d'informations de reconstruction du troisième signal au premier terminal, de sorte que le premier terminal détermine un paramètre de canal à partir d'une antenne d'émission du second terminal à une antenne de réception du premier terminal en fonction du deuxième signal d'interférence et des informations de reconstruction du troisième signal, dans lequel une ressource utilisée par le second terminal pour envoyer les informations de reconstruction du troisième signal est différente de la seconde ressource ; et

l'envoi (S230), par le second terminal, d'un deuxième signal à la station de base en utilisant la première ressource, dans lequel le premier terminal reçoit un premier signal en utilisant la première ressource, le premier signal comprend un premier signal d'interférence et un signal voulu qui vient de la station de base, et le premier signal d'interférence est un signal d'interférence généré lorsque le second terminal envoie le deuxième signal à la station de base en utilisant la première ressource.

**5.** Procédé selon la revendication 4, dans lequel les informations de reconstruction du troisième signal comprennent un signal de bande de base numérique non modulé et un procédé de modulation qui correspondent au troisième signal ; et le procédé comprend en outre : l'envoi, par le second terminal, d'informations de reconstruction du deuxième signal au premier terminal, dans lequel les informations de reconstruction du deuxième signal comprennent un signal de bande de base numérique non modulé et un procédé de modulation qui correspondent au deuxième signal.

**6.** Procédé selon la revendication 4, dans lequel les informations de reconstruction du troisième signal comprennent un signal de radiofréquences correspondant au troisième signal ; et le procédé comprend en outre : l'envoi, par le second terminal, d'informations de reconstruction du deuxième signal au premier signal, dans lequel les informations de reconstruction du deuxième signal comprennent un signal de radiofréquences correspondant au deuxième signal.

**7.** Terminal, **caractérisé en ce qu'**il comprend :

un module de détermination (310), configuré pour déterminer un paramètre de canal à partir d'une antenne d'émission d'un second terminal à une antenne de réception du terminal ; un premier module de réception (320), configuré pour recevoir un premier signal en utilisant une première ressource, dans lequel le premier signal comprend un premier signal d'interférence et un signal voulu qui vient d'une station de base, et le premier signal d'interférence est un signal d'interférence généré lorsque le second terminal envoie un deuxième signal à la station de base en utilisant la première ressource ; et un module d'annulation d'interférence (330), configuré pour déterminer, en fonction du paramètre de canal déterminé par le module de détermination (310), le premier signal d'interférence dans le premier signal reçu par le premier module de réception (320), et annuler le premier signal d'interférence ; dans lequel le module de détermination (310) comprend :

une première unité de réception (311), configurée pour recevoir un deuxième signal d'interférence en utilisant une seconde ressource, dans lequel le deuxième signal d'interférence est un signal d'interférence généré lorsque le second terminal envoie un troisième signal à la station de base en utilisant la seconde ressource, et il n'existe aucun signal en liaison descendante à envoyer au terminal dans la seconde ressource ; une seconde unité de réception (312), configurée pour recevoir des informations de reconstruction qui viennent du troisième signal et envoyées par le second terminal, dans lequel une ressource utilisée par le second terminal pour envoyer les informations de reconstruction du troisième signal est différente de la seconde ressource ; et une unité de détermination (313), configurée pour déterminer le paramètre de canal à partir de l'antenne d'émission du second terminal à l'antenne de réception du terminal en fonction du deuxième signal d'interférence et des informations de reconstruction du troisième signal ;

dans lequel lorsqu'un rapport de puissance d'un signal d'interférence par rapport à un signal voulu est supérieur ou égal à un deuxième seuil et inférieur ou égal à un troisième seuil, dans lequel le signal d'interférence et le signal voulu sont dans un signal reçu par le terminal, les informations de reconstruction qui viennent du troisième signal et reçues par la seconde unité de réception (312) comprennent :

un signal de bande de base numérique non modulé et un procédé de modulation qui correspondent au troisième signal.

**8.** Terminal selon la revendication 7, dans lequel lorsqu'un rapport de puissance d'un signal d'interférence par rapport à un signal voulu est supérieur à un premier seuil et inférieur à un deuxième seuil, dans lequel le signal d'interférence et le signal voulu sont dans un signal reçu par le terminal, les informations de reconstruction qui viennent du troisième signal et reçues par la seconde unité de réception (312) comprennent un signal de bande de base numérique non modulé et un procédé de modulation qui correspondent au troisième signal ;

le terminal comprend en outre :

un second module de réception (340), configuré pour recevoir des informations de reconstruction qui viennent du deuxième signal et envoyées par le second terminal, dans lequel les informations de reconstruction du deuxième signal comprennent un signal de bande de base numérique non modulé et un procédé de modulation qui correspondent au deuxième signal, et une ressource utilisée par le deuxième terminal pour envoyer les informations de reconstruction du deuxième signal est différente de la première ressource ; et

le module d'annulation d'interférence (330) est configuré spécifiquement pour :

déterminer le premier signal d'interférence dans le premier signal en fonction des informations de reconstruction qui viennent du deuxième signal et reçues par le second module de réception (340) et le paramètre de canal déterminé par l'unité de détermination (313), et annuler le premier signal d'interférence.

**9.** Terminal selon la revendication 7, dans lequel lorsqu'un rapport de puissance d'un signal d'interférence par rapport à un signal voulu est supérieur à un troisième seuil, dans lequel le signal d'interférence et le signal voulu sont dans un signal reçu par le terminal, les informations de reconstruction qui viennent du troisième signal et reçues par la seconde unité de réception (312) comprennent un signal de radiofréquences correspondant au troisième signal ;

le terminal comprend en outre :

un second module de réception (340), configuré pour recevoir des informations de reconstruction qui viennent du deuxième signal et envoyées par le second terminal, dans lequel les informations de reconstruction du deuxième signal comprennent un signal de radiofréquences correspondant au deuxième signal, et une ressource utilisée par le second terminal pour envoyer les informations de reconstruction du deuxième signal est différente de la première ressource ; et

un module d'annulation d'interférence (330) est spécifiquement configuré pour :

déterminer le premier signal d'interférence dans le premier signal en fonction des informations de reconstruction qui viennent du deuxième signal et reçues par le second module de réception (340) et du paramètre de canal déterminé par l'unité de détermination (313), et annuler le premier signal d'interférence.

**10.** Terminal, **caractérisé en ce qu'**il comprend :

un premier module d'envoi (410), configuré pour envoyer un troisième signal à une station de base en utilisant une seconde ressource, dans lequel il n'existe aucun signal en liaison descendante à envoyer à un premier terminal en utilisant la seconde ressource, et le premier terminal reçoit, en utilisant la seconde ressource, un deuxième signal d'interférence généré par le troisième signal ;

un deuxième module d'envoi (420), configuré pour envoyer des informations de reconstruction du troisième signal au premier terminal, de sorte que le premier terminal détermine un paramètre de canal à partir d'une antenne d'émission du terminal à une antenne de réception du premier terminal en fonction du deuxième signal d'interférence et des informations de reconstruction du troisième signal, dans lequel une ressource utilisée par le terminal pour envoyer les informations de reconstruction du troisième signal est différente de la seconde ressource ; et

un troisième module d'envoi (430), configuré pour envoyer un deuxième signal à la station de base en utilisant la première ressource, dans lequel le premier terminal reçoit un premier signal en utilisant la première ressource, le premier signal comprend un premier signal d'interférence et un signal voulu qui vient de la station de base, et le premier signal d'interférence est un signal d'interférence généré lorsque le terminal envoie le deuxième signal à la station de base en utilisant la première ressource.

**11.** Terminal selon la revendication 10, dans lequel les informations de reconstruction qui viennent du troisième signal et envoyées par le deuxième module d'envoi (420) comprennent un signal de bande de base numérique non modulé et un procédé de modulation qui correspondent au troisième signal ; et
le terminal comprend en outre :
un quatrième module d'envoi (440), configuré pour envoyer des informations de reconstruction du deuxième signal au premier terminal, dans lequel les informations de reconstruction du deuxième signal comprennent un signal de bande de base numérique non modulé et un procédé de modulation qui correspondent au deuxième signal.

**12.** Terminal selon la revendication 10, dans lequel les informations de reconstruction qui viennent du troisième signal et envoyées par le deuxième module d'envoi (420) comprennent un signal de radiofréquences correspondant au troisième signal ; et
le terminal comprend en outre :
un quatrième module d'envoi (440), configuré pour envoyer des informations de reconstruction du deuxième signal au premier terminal, dans lequel les informations de reconstruction du deuxième signal comprennent un signal de radiofréquences correspondant au deuxième signal.

Base station

First
terminal

Second
terminal

FIG. 1

100

| A first terminal determines a channel parameter from a transmit antenna of a second terminal to a receive antenna of the first terminal | S110 |

| The first terminal receives a first signal by using a first resource, where the first signal includes a first interference signal and a wanted signal that is from a base station, and the first interference signal is an interference signal generated when the second terminal sends a second signal to the base station by using the first resource | S120 |

| The first terminal determines the first interference signal in the first signal according to the channel parameter, and cancels the first interference signal | S130 |

FIG. 2

S110

| The first terminal receives a second interference signal by using a second resource, where the second interference signal is an interference signal generated when the second terminal sends a third signal to the base station by using the second resource, and there is no downlink signal to be sent to the first terminal by using the second resource |
|---|

S111

| The first terminal receives reconstruction information that is of the third signal and sent by the second terminal, where a resource used by the second terminal to send the reconstruction information of the third signal is different from the second resource |
|---|

S112

| The first terminal determines the channel parameter from the transmit antenna of the second terminal to the receive antenna of the first terminal according to the second interference signal and the reconstruction information of the third signal |
|---|

S113

FIG. 3

200

```
A second terminal sends a third signal to a base station by using a
second resource, where there is no downlink signal to be sent to a
first terminal by using the second resource, and the first terminal        S210
receives, by using the second resource, a second interference signal
                generated by the third signal
```

```
The second terminal sends reconstruction information of the third
signal to the first terminal, so that the first terminal determines a
channel parameter from a transmit antenna of the second terminal to
a receive antenna of the first terminal according to the second
interference signal and the reconstruction information of the third       S220
signal, where a resource used by the second terminal to send the
reconstruction information of the third signal is different from the
                    second resource
```

```
The second terminal sends a second signal to the base station by
using the first resource, where the first terminal receives a first
signal by using the first resource, the first signal includes a first
interference signal and a wanted signal that is from the base station,    S230
and the first interference signal is an interference signal generated
when the second terminal sends the second signal to the base station
                by using the first resource
```

FIG. 4

Terminal 300

Determining module 310

First receiving module 320

Interference cancellation module 330

Second receiving module 340

FIG. 5

Determining module 310

First receiving unit 311

Second receiving unit 312

Determining unit 313

FIG. 6

Terminal 400

First sending module 410

Second sending module 420

Third sending module 430

Fourth sending module 440

FIG. 7

Terminal 500

Processor
510

Receiver
520

Bus 540

Memory
530

FIG. 8

Terminal 600

Processor
610

Transmitter
620

Bus 640

Memory
630

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011149714 A
- US 2013044791 A1
- US 2013286903 A1